# EUROPEAN PATENT SPECIFICATION

(11) **EP 3 226 525 B1**
(45) Date of publication and mention of the grant of the patent: **29.04.2020**
(21) Application number: 15863118.4
(22) Date of filing: 05.08.2015
(51) Int. Cl.: H04M 3/00, H04M 3/56, H04N 7/15

(54) **CONTROL SYSTEM, COMMUNICATION TERMINAL, CONTROL DEVICE, COMMUNICATION SYSTEM, CONTROL METHOD, AND PROGRAM**
STEUERUNGSSYSTEM, KOMMUNIKATIONSENDGERÄT, STEUERUNGSVORRICHTUNG, KOMMUNIKATIONSSYSTEM, STEUERUNGSVERFAHREN UND PROGRAMM
SYSTÈME DE COMMANDE, TERMINAL DE COMMUNICATION, DISPOSITIF DE COMMANDE, SYSTÈME DE COMMUNICATION, PROCÉDÉ DE COMMANDE ET PROGRAMME

(30) Priority: 26.11.2014 JP 2014238732
(43) Date of publication of application: 04.10.2017
(73) Proprietor: Ricoh Company, Ltd., Tokyo 143-8555 (JP)
(72) Inventor: UMEHARA, Naoki, Tokyo 143-8555 (JP); ASAI, Takahiro, Tokyo 143-8555 (JP); HINOHARA, Hiroshi, Tokyo 143-8555 (JP)
(74) Representative: SSM Sandmair
(86) International application number: PCT/JP2015/072285
(87) International publication number: WO 2016/084429

(56) References cited:
- WO-A1-2013/172482
- JP-A- 2006 244 100
- JP-A- 2010 183 643
- JP-A- 2011 205 291

## Description

### Field

The present invention relates to a control system, a communication terminal, a control device, a communication system, a control method, and a program.

### Background

In recent years, to meet demand for reducing the expenses and the time required for the traveling of the persons concerned, communication systems such as teleconference systems have become popular for the purpose of conducting telephone calls and meetings via a communication network such as the Internet or a dedicated line. In such a communication system, when communication is started among communication terminals, contents data such as image data and audio data is sent and received so that the communication between the persons concerned is carried out.

In a teleconference system, until a session for sending contents data is established, information such as a start request for starting the communication or authorization for starting the communication is sent among teleconference terminals via a teleconference management system that manages the teleconference (see Patent Literature 1). The teleconference management system is connected to the teleconference terminals, and performs control for establishing a session based on the information received from the teleconference terminals.

Meanwhile, in the teleconference system disclosed in Patent Literature 1, a plurality of teleconference management systems is installed, and the information such as a start request mentioned above is sent to the teleconference terminals via the plurality of teleconference management systems. This teleconference system allows the teleconference management systems representing the connection destinations of the teleconference terminals to be distributed. That enables achieving reduction in load for establishing a session in each teleconference management system.
WO 2013/172482 A1 discloses a transmission / reception unit of a management system which receives a relay device ID transmitted by a selection device. Also, the transmission / reception unit transmits communication control request information to another management system based on the relay device ID. Consequently, a relay device to be used to relay content data to be transmitted / received among terminals can be selected from relay devices that the other management system can control.

### Summary

### Technical Problem

However, if a plurality of control devices for controlling sessions is installed in a communication system, there is a problem in that the information transmission path becomes long when the information sent among communication terminals gets sent via the plurality of control devices.

### Solution to Problem

A control system according to the invention set forth in claim 1 includes a plurality of control devices that control a session for sending contents data among communication terminals. Each of the plurality of control devices includes a destination information sending unit configured to send destination information indicating address of a first communication terminal connected to concerned control device in a communication network to a management device that manages the destination information; a destination information receiving unit configured to receive sets of destination information each of which indicates address of a second communication terminal connected to another control device from among the plurality of control devices and each of which is sent by the management device; an inter-terminal information receiving unit configured to receive, from among inter-terminal information sent between the first communication terminal and the second communication terminal, the inter-terminal information sent by the first communication terminal; and an inter-terminal information sending unit configured to send, based on the destination information of the second communication terminal received by the destination information receiving unit, the inter-terminal information received by the inter-terminal information receiving unit to the second communication terminal. Advantageous Effects of Invention

As described above, according to the present invention, when a plurality of control devices for controlling sessions is installed in a communication system, it becomes possible to provide an advantageous effect of shortening the information transmission path among the communication terminals.

### Brief Description of Drawings

Fig. 1 is a schematic view of a communication system according to an embodiment of the present invention.
Fig. 2 is a state transition diagram illustrating state transitions of a terminal.
Fig. 3 is a conceptual diagram illustrating an example of a destination list.
Fig. 4 is an exemplary external view of the terminal.
Fig. 5 is a hardware configuration diagram of the terminal.
Fig. 6 is a hardware configuration diagram of a control device.
Fig. 7 is an overall configuration diagram of the communication system according to the embodiment.
Fig. 8 is a diagram illustrating functional block diagrams of the terminal, a relay device, the control device, and a common management device.
Fig. 9 is a conceptual diagram illustrating various management tables managed by the control devices and the common management device constituting a management system.
Fig. 10 is a sequence diagram illustrating a login operation performed by the terminal.
Fig. 11 is a sequence diagram for explaining the operations performed till a destination list is displayed in the terminal.
Fig. 12 is a sequence diagram for explaining the operations of synchronizing the operating statuses among the control devices.
Fig. 13 is a sequence diagram for explaining the operations for sending information among the terminals.
Fig. 14 is a diagram illustrating sequence diagrams for explaining the operations for starting the relay of contents data.
Fig. 15 is a sequence diagram for explaining the operations by which a particular terminal participates in a session.
Fig. 16 is a diagram illustrating sequence diagrams for explaining the operations by which a particular terminal exits a session.
Fig. 17 is a diagram for explaining a logout operation performed by a particular terminal.

### Description of Embodiments

An embodiment of the present invention is described below with reference to the accompanying drawings.

### «Overview of communication system»

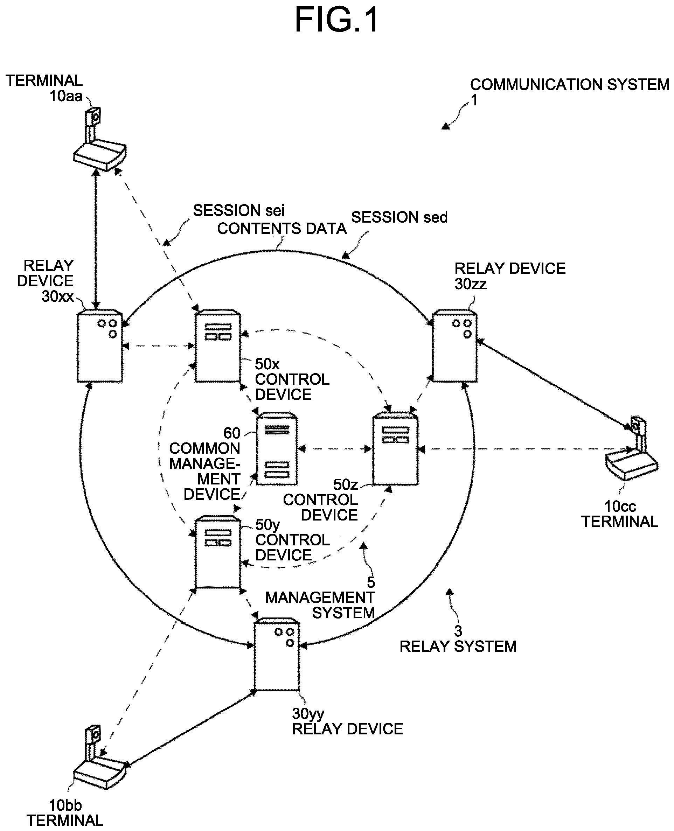

First, explained with reference to Fig. 1 is an overview of a communication system according to the embodiment of the present invention. Fig. 1 is a schematic view illustrating the state of transmission and reception of a variety of information in a communication system 1. In the following explanation, a communication terminal is simply referred to as a "terminal".

The communication system according to the embodiment is built using a plurality of terminals 10aa, 10bb, and 10cc, a plurality of relay devices 30xx, 30yy, and 30zz, and a management system 5. Herein, the management system 5 includes a plurality of control devices 50x, 50y, and 50z and a common management device 60. In the following explanation, from among a plurality of terminals 10aa, 10bb, and 10cc, an arbitrary terminal is referred to as the "terminal 10". Similarly, from among a plurality of relay devices 30xx, 30yy, and 30zz, an arbitrary relay device is referred to as the "relay device 30". Moreover, from among a plurality of control devices 50x, 50y, and 50z, an arbitrary control device is referred to as the "control device 50".

Each terminal 10 performs communication by sending and receiving contents data. Moreover, one or more relay devices 30 relay contents data among a plurality of terminals 10. As a result, among a plurality of terminals 10, one or more sessions get established for sending one or more sets of contents data. In the following explanation, a session for sending one or more sets of contents data is referred to as a session sed.

When the terminals 10 participate in a session sed, contents data gets exchanged among the terminals 10, thereby making it possible to perform communication such as telephone calls among a plurality of business establishments, telephone calls among different rooms of the same business establishment, telephone calls within the same room, or telephone calls between an outdoor place and an indoor place or between outdoor places. Meanwhile, when the terminals 10 are used outdoors, wireless communication using a cellular phone communication network can be performed.

As described above, the communication system 1 functions as a communication system that establishes a session sed via a communication management system (equivalent to a "management system") and enables mutual transmission of information and sentiments among a plurality of communication terminals (equivalent to "terminals").

In the present embodiment, the explanation is given about a communication system, a management system, and a terminal under the assumption that a videoconference system represents an example of a communication system, a videoconference management system represents an example of a communication management system, and a videoconference terminal represents an example of a communication terminal. That is, the terminal and the communication system according to the present invention are not only applicable in a videoconference system but are also applicable in a communication system. Thus, the communication system 1 can be a telephone system, and the terminal 10 can be an IP (Internet Protocol) telephone, an Internet phone, or a PC (personal computer).

Meanwhile, in the embodiment, the term "videoconference" is used in an interchangeable manner with the term "teleconference".

The following explanation is given about the communication performed using videoconference terminals (narrower concept) representing terminals (mid-level concept). However, that is not the only possible case. That is, as long as the communication can be performed with a broad concept including telephone calls, it serves the purpose. For example, the communication system 1 can be implemented also in a case in which an application actively accesses a server at a center, and sends and obtains a variety of data. In that case, the other side of communication may not be a terminal and may be a server too. Moreover, a terminal may be a gaming console or a car navigation device. Furthermore, the communication system 1 can be an information sharing system, and the terminal 10 can be a projector, a digital signage, or an interactive whiteboard.

In the communication system 1 according to the embodiment, one or more sets of contents data sent among the terminals 10 include, for example, four sets of data, namely, high-resolution image data, medium-resolution image data, low-resolution image data, and audio data. Meanwhile, images represented by image data either can be moving images or still images or can be moving images and still images. The low-resolution image data is, for example, 160 pixels wide and 120 pixels tall, and represents a base image. The medium-resolution image data is 320 pixels wide and 240 pixels tall. The high-resolution image data is, for example, 640 pixels wide and 480 pixels tall. According to the embodiment, in the case in which contents data is sent among a plurality of terminals 10 via a narrow-band channel; image data of low image quality, which is only low-resolution image data representing the base image, is relayed. In the case of using a relatively wider bandwidth for transmission; image data of medium image quality, which is low-resolution image data representing the base image and medium-resolution image data, is relayed. In the case of using an extremely wide bandwidth for transmission; image data of high image quality, which is low-resolution image data representing the base image, medium-resolution image data, and high-resolution image data, is relayed. The audio data has a smaller volume of data as compared to image data. Hence, the audio data gets relayed in a narrow-band channel too.

In the communication system 1 illustrated in Fig. 1, a plurality of relay devices 30 constitute a relay system 3. In Fig. 1 is illustrated the embodiment in which three relay devices 30 relay contents data among three terminals 10. However, the present invention is not limited to that case. Alternatively, for example, in the communication system 1, it is possible to have two relay devices 30 relaying contents data among three terminals 10, or it is possible to have three relay devices 30 relaying data between two terminals 10.

The common management device 60 manages common information that represents a variety of information related to the terminals 10 or related to the sessions sed among the terminals 10, and that is used by each control device 50.

Among the terminals 10, a session for sending a variety of information is established via the control devices 50. In the following explanation, such a session is referred to as a session sei. The variety of information sent among the terminals 10 contains a start request for starting communication, authorization for starting communication, and an end request for ending communication. Based on the variety of information sent from the terminals 10, each control device 50 can get to know the state of the terminals 10.

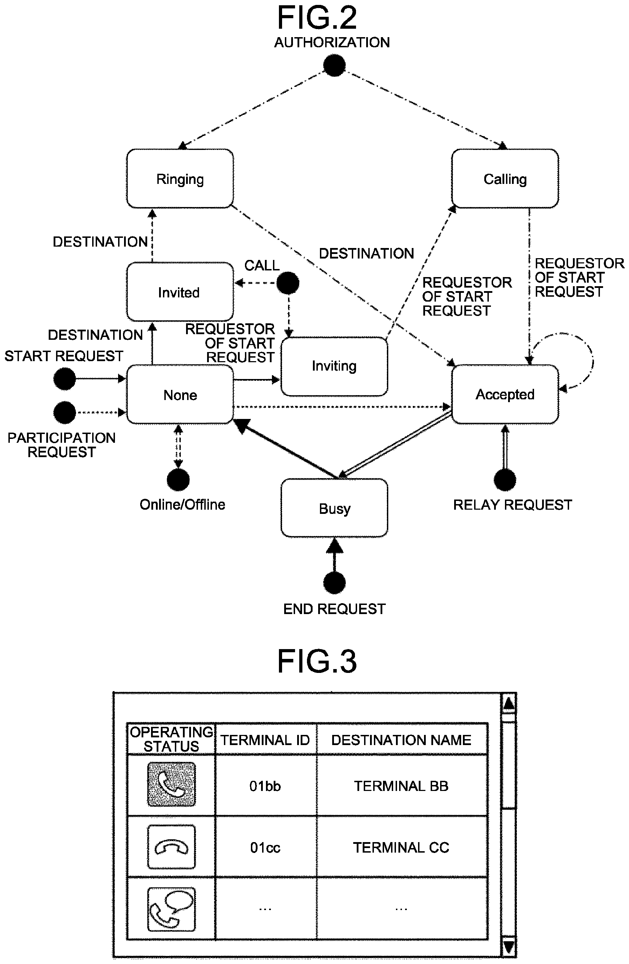

Fig. 2 is a state transition diagram illustrating an example of state transitions of the terminal 10. In the state transition diagram illustrated in Fig. 2, in each box is written state information such as "None" indicating a state of the terminal 10. When the terminal 10 logs in to the control device 50 and goes online, the state of communication of the post-login terminal 10 switches to the standby state prior to the start of communication (the state indicated by state information "None"). Then, once the concerned terminal 10 issues a start request for starting communication with another terminal 10, the state of communication of the terminal that issued the start request switches to the state of requesting for the start of communication with the other terminal 10 (the state indicated by state information "Inviting"), and the state of communication of the destination terminal 10 switches to the state of being requested for the start of communication from another terminal 10 (the state indicated by state information "Invited"). Subsequently, when the destination terminal 10 outputs a ring alert, the state of communication of the destination terminal 10 switches to the state of outputting a ring alert (the state indicated by state information "Ringing"), and the state of communication of the terminal 10 that issued the start request switches to the state of outputting a dial tone (the state indicated by state information "Calling"). Once the destination terminal 10 authorizes the start request, the terminal 10 that issued the start request and the destination terminal 10 switch to the state in which the start request is authorized (the state indicated by state information "Accepted"). Meanwhile, when a particular terminal 10 issues a start request for starting the relay of contents data, the state of communication of the terminal 10 switches to the state of performing communication (the state indicated by state information "Busy"). When a particular terminal 10 issues an end request for ending the communication, the state of communication of the terminal 10 that issued the end request returns to the state indicated by the state information "None". Moreover, when a particular terminal 10 issues a participation request for participating in an already-established session sed, the state of communication of the terminal 10 that issued the participation request switches to the state indicated by the state information "Accepted". Herein, the rules of state transition are only exemplary, and it is possible to adopt other rules in the communication system 1.

A storage unit 5000 of each control device 50 is used to store information that indicates the rules of state transition illustrated in the state transition diagram in Fig. 2. Thus, for example, when a start request is issued from a particular terminal 10, if the terminal 10 that issued the start request has the state of communication "None", then the control device 50 sends the start request to the destination terminal 10. However, if the terminal 10 that issued the start request does not have the state of communication "None", then the control device 50 can deny the start request and accurately perform call control between the terminals 10.

Meanwhile, other than managing the state of communication of the terminals 10 as described above, each control device 50 manages, for example, the operating status (presence) of each terminal 10 with the aim of notifying the operating status to the users of the terminals 10. Examples of the operating status of a particular terminal 10 include: the state "Online" in which the terminal 10 is connected to the control device 50 but is not performing communication with other terminals 10; the state "Online (in a call)" in which the terminal 10 is connected to the control device 50 and is performing communication with other terminals 10; and the state "Offline" in which the terminal 10 is not connected to the control device 50. Each control device 50 notifies the terminal 10 connected thereto about the operating statuses of the terminals 10 representing the destination candidates of the concerned terminal 10. When a particular terminal 10 receives the operating statuses from the control device 50; a corresponding display controller 17 updates, based on the operating statuses, the icons (see Fig. 3) representing the operating statuses in a destination list (see Fig. 3).

### «Hardware configuration according to embodiment»

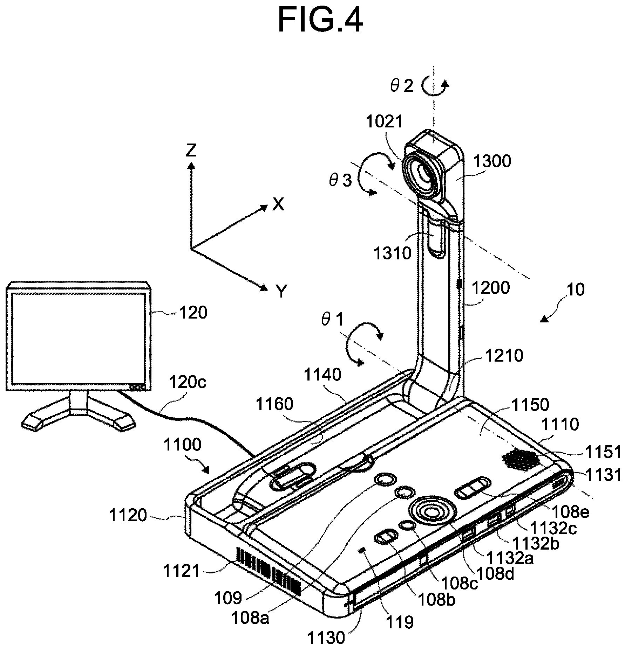

Given below is the explanation of a hardware configuration according to the embodiment. Fig. 4 is an exemplary external view of the terminal 10 according to the embodiment. As illustrated in Fig. 4, the terminal 10 includes a housing 1100, an arm 1200, and a camera housing 1300. On a front wall surface 1110 of the housing 1100, an air intake face having a plurality of air intake holes is formed. On a rear wall surface 1120 of the housing 1100, an exhaust face 1121 having a plurality of exhaust holes is formed. Thus, when an internal cooling fan of the housing 1100 is driven, the outside air can be taken in from behind the terminal 10 via the air intake face, and can be released rearward of the terminal 10 via the exhaust face 1121. On a right-side wall surface 1130 of the housing 1100, a sound pickup hole 1131 is formed that enables a built-in microphone 114 (described later) to pick up any sound such as a voice, a noise, or a disturbing noise.

On the side of the right-side wall surface 1130 of the housing 1100, an operation panel 1150 is formed. The operation panel 1150 has a plurality of operation buttons (108a to 108e) (described later), a power switch 109 (described later), and an alarm lamp 119 (described later) installed thereon; as well as has an audio output face 1151 formed thereon with a plurality of audio output holes for letting out the output sound from a built-in speaker 115 (described later). On a left-side wall surface 1140 of the housing 1100, a container 1160 in the form of a depression is formed for accommodating the arm 1200 and the camera housing 1300. On the right-side wall surface 1130 of the housing 1100, a plurality of connecting ports (1132a to 1132c) is provided for electrically connecting cables to an external device connection I/F 118 (described later). On the left-side wall surface 1140 of the housing 1100, a connecting port is provided for electrically connecting a cable 120c of a display 120 to the external device connection I/F 118 (described later).

In the following explanation, from among the operation buttons (108a to 108e), an arbitrary operation button is referred to as the "operation button 108". Moreover, from among the connecting ports (1132a to 1132c), an arbitrary connecting port is referred to as the "connecting port 1132".

The arm 1200 is attached to the housing 1100 via a torque hinge 1210, and is configured to be vertically rotatable with respect to the housing 1100 within the range of a tilt angle θ1 of 135°. In Fig. 4 is illustrated the state in which the tilt angle θ1 is of 90°. In the camera housing 1300 is installed a built-in camera 112 (described later) that can take images of users, documents, and rooms. Moreover, in the camera housing 1300, a torque hinge 1310 is provided via which the camera housing 1300 is attached to the arm 1200 in a vertically-and-horizontally rotatable manner within a pan angle θ2 of ±180° and within a tilt angle θ3 of ±45° with the state illustrated in Fig. 4 representing 0°.

Meanwhile, the external view illustrated in Fig. 4 is only exemplary, and the terminal 10 is not limited to have that external view. Examples of the terminal 10 include a PC, a smartphone, and a tablet terminal. Moreover, the camera and the microphone need not always be of the built-in type, and can be of the external type.

The relay device 30, a relay management device 40, the control device 50, and the common management device 60 have the same external appearance as a commonly-used server computer. Hence, the explanation about that external appearance is not given.

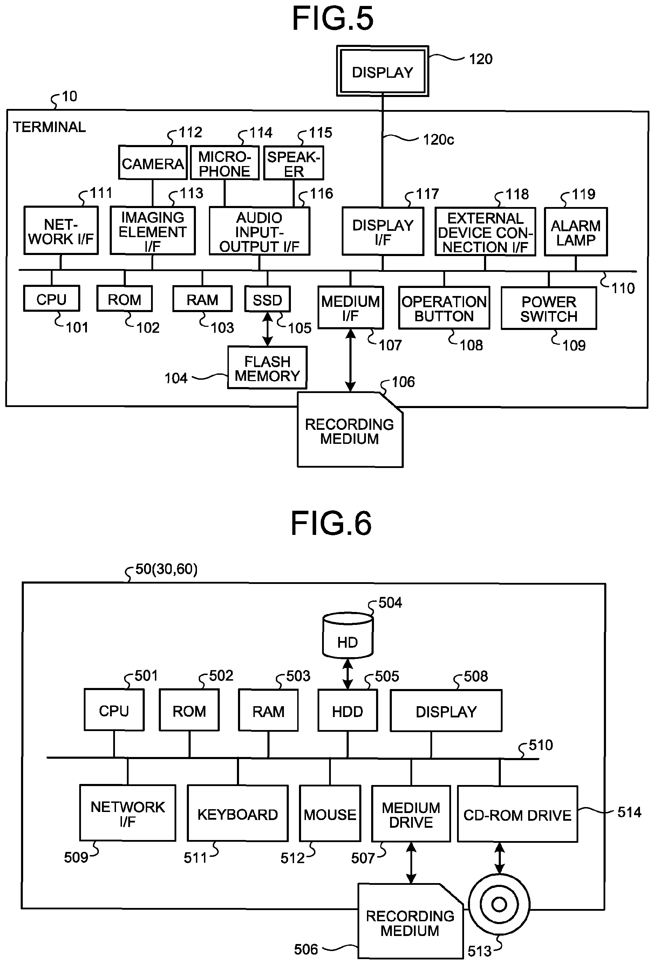

Fig. 5 is a hardware configuration diagram of the terminal 10 according to the present embodiment. As illustrated in Fig. 5, the terminal 10 according to the present embodiment includes a CPU (Central Processing Unit) 101 that controls the overall operations of the terminal 10; a ROM (Read Only Memory) 102 that is used to store programs such as an IPL (Initial Program Loader) used in driving the CPU 101; a RAM (Random Access Memory) 103 that is used as the work area of the CPU 101; a flash memory 104 that is used to store a variety of data such as various terminal-intended programs, image data, and audio data; an SSD (Solid State Drive) 105 that controls reading or writing of a variety of data with respect to the flash memory 104 under the control of the CPU 101; a medium I/F 107 that controls reading or writing (storing) of data in a recording medium 106 such as a flash memory or an IC card (Integrated Circuit Card); the operation button 108 that is operated in the case of selecting a destination; the power switch 109 for switching ON and switching OFF the power of to the terminal 10; and a network I/F (Interface) 111 for data transmission using a communication network 2.

Moreover, the terminal 10 includes the built-in camera 112 that takes images of photographic subjects under the control of the CPU 101 and obtains image data; an imaging element I/F 113 that controls the driving of the camera 112; the built-in microphone 114 that inputs audio; the built-in speaker 115 that outputs audio; an audio input-output I/F 116 for performing input and output of audio signals between the microphone 114 and the speaker 115 under the control of the CPU 101; a display I/F 117 for sending image data to the external display 120 under the control of the CPU 101; the external device connection I/F 118 for establishing connection with various external devices; the alarm lamp 119 that notifies malfunctioning of various functions of the terminal 10; and a bus line 110 such as an address bus or a data bus that electrically connects the abovementioned constituent elements in a manner illustrated in Fig. 5.

The display 120 is a display unit of liquid crystals or organic EL (Organic Electroluminescence) that displays images of photographic subjects and operation information. The display 120 is connected to the display I/F 117 via the cable 120c. Herein, the cable 120c can be a cable meant for analog RGB (VGA) signals, or can be a cable meant for component video signals, or can be a cable meant for HDMI (registered trademark) (High-Definition Multimedia Interface) signals or DVI (Digital Video Interactive) signals.

The camera 112 includes a lens, and a solid-state image sensing device that converts light into electrical charge and computerizes the image (video) of a photographic subject. Examples of the solid-state image sensing device include a CMOS (Complementary Metal Oxide Semiconductor) and a CCD (Charge Coupled Device).

To the external device connection I/F 118, external devices such as an external camera, an external microphone, and an external speaker can be electrically connected using USB (Universal Serial Bus) cables inserted in the connecting ports 1132 of the housing 1100. When an external camera is connected, it is driven with priority over the built-in camera 112 under the control of the CPU 101. Similarly, when an external microphone is connected or an external speaker is connected, it is driven with priority over the built-in microphone 114 or the built-in speaker 115 under the control of the CPU 101.

Meanwhile, the recording medium 106 is configured to be detachably attachable to the terminal 10. Moreover, as long as a nonvolatile memory is used that enables reading or writing of data under the control of the CPU 101, the memory is not limited to the flash memory 104 and alternatively an EEPROM (Electrically Erasable and Programmable ROM) can also be used.

Fig. 6 is a hardware configuration diagram of the control device 50. Herein, the control device 50 includes a CPU 501 that controls the overall operations of the control device 50; a ROM 502 that is used to store programs such as an IPL (Initial Program Loader) used in driving the CPU 501; a RAM 503 that is used as the work area of the CPU 501; an HD 504 that is used to store a variety of data such as programs meant for the control device 50; an HDD (Hard Disk Drive) 505 that controls reading or writing of a variety of data with respect to the HD 504 under the control of the CPU 501; a medium drive 507 that controls reading or writing (storing) of data in a recording medium 506 such as a flash memory; a display 508 that displays a variety of information such as a cursor, menus, windows, characters, and images; a network I/F 509 for performing data communication using the communication network 2; a keyboard 511 having a plurality of keys for inputting characters, numerical values, and various instructions; a mouse 512 for selecting and implementing various instructions, selecting the processing target, and moving the cursor; a CD-ROM drive 514 that controls reading or writing of a variety of data with respect to a CD-ROM (Compact Disk Read Only Memory) 513 representing an example of a detachably-attachable recording medium; and a bus line 510 such as an address bus or a data bus that electrically connects the abovementioned constituent elements in a manner illustrated in Fig. 6.

The relay device 30 has an identical configuration to that of the control device 50. Hence, that explanation is not repeated.

Meanwhile, the programs meant for the terminal 10, the relay device 30, the control device 50, and the common management device 60 can be recorded as installable or executable files in a computer-readable recording medium, and can be distributed. Examples of the recording medium include a CD-R (Compact Disc Recordable), a DVD (Digital Versatile Disk), and a Blu-ray disc. The recording medium such as a CD-ROM in which the programs are stored and the HD 504 in which the programs are stored can be provided as a program product within and outside the country.

Meanwhile, the control device 50 as well as the common management device 60 either can be configured using a single computer or can be configured using a plurality of computers among which the constituent elements (the functions or the modules) are divided and assigned in an arbitrary manner. Moreover, the common management device 60 can be configured in any one of a plurality of control devices 50.

### «Overall configuration of communication system»

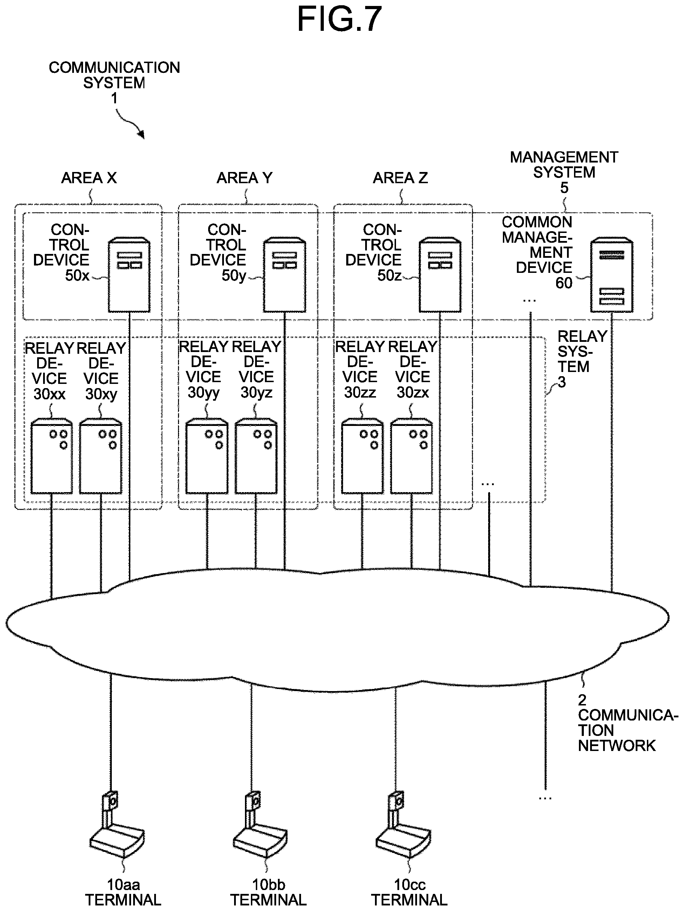

Explained below with reference to Fig. 7 is an overall configuration according to the embodiment. Fig. 7 is an overall configuration diagram of the communication system according to the embodiment of the present invention.

The terminals 10, the relay devices 30, the control devices 50, and the common management device 60 are communicably connected to other terminals and devices via the communication network 2. Herein, the communication network 2 can be a LAN2x (Local Area Network), the Internet, a cellular phone network, or a dedicated line. Although there is no particular restriction, the connection among the relay devices 30, or the connection among the control devices 50, or the connection of the control devices 50 with the common management device 60 can be done using the communication network 2 as a dedicated line. That enables achieving stability in the communication among the devices. Herein, the communication performed via the communication network 2 can include wired communication and wireless communication.

The relay devices (30xx and 30xy) and the control device 50x are installed in an area X. For example, the area X represents Japan, and the relay devices (30xx and 30xy) and the control device 50x are installed in a data center in Tokyo.

The relay devices (30yy and 30yz) and the control device 50y are installed in an area Y. For example, the area Y represents the USA, and the relay devices (30yy and 30yz) and the control device 50y are installed in a data center in New York.

The relay devices (30zz and 30zx) and the control device 50z are installed in an area Z. For example, the area Z represents the Southeast Asia, and the relay devices (30zz and 30zx) and the control device 50z are installed in a data center in Singapore.

The terminals 10aa, 10bb, and 10cc are portable in nature, and can be connected to the communication network 2 from the areas (X, Y, and Z) or can be connected to the communication network 2 from some other areas.

In the communication system 1, four or more terminals can also be installed. The common management device 60 can be installed in one of the areas (X, Y, and Z), or can be installed in some other area. Moreover, the relay device 30 and the control device 50 can be installed also in areas other than the areas (X, Y, and Z).

### «Functional configuration according to embodiment»

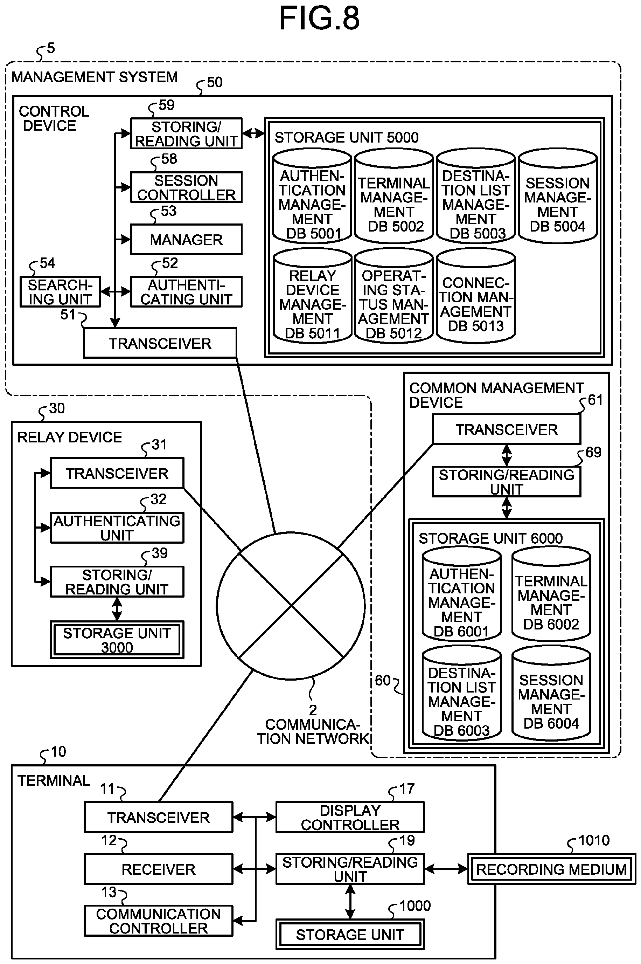

Explained below with Figs. 5, 6, and 8 is a functional configuration according to the embodiment. In Fig. 8 are illustrated functional block diagrams of the communication system according to the embodiment.

### <Functional configuration of terminal>

The terminal 10 includes a transceiver 11, a receiver 12, a communication controller 13, the display controller 17, and a storing/reading unit 19. Each of those constituent elements is a function or a functioning module that is implemented when one of the constituent elements illustrated in Fig. 5 performs operations by following the instructions from the CPU 101 according to the terminal-intended program, which is loaded in the RAM 103 from the flash memory 104. Meanwhile, the terminal 10 includes the RAM 103 and includes a storage unit 1000 configured using the flash memory 104. Moreover, in the terminal 10, a recording medium 1010 configured using the recording medium 106 is inserted and is subjected to reading and writing of a variety of data by the storing/reading unit 19.

### (Functional configurations in terminal)

Given below is the detailed explanation of the functional configurations in the terminal 10. While explaining the functional configurations in the terminal 10, the explanation is given also about the relationship of such main constituent elements, from among the constituent elements illustrated in Fig. 5, which enable implementation of the functional configurations in the terminal 10.

The transceiver 11 is implemented by the network I/F 111 in response to an instruction from the CPU 101, and performs transmission and reception of a variety of data (or information) with other terminals, devices, or systems via the communication network 2.

The receiver 12 is implemented in response to an instruction from the CPU 101 and receives various inputs such as an operation of the operation button 108 by the user or pressing of the power switch 109 by the user. For example, when the user switches ON the power switch 109, the receiver 12 receives the switching ON operation and turns ON the power source.

The communication controller 13 is implemented by the camera 112 and the imaging element I/F 113 in response to an instruction from the CPU 101, and takes an image of the photographic subject and outputs image data obtained by imaging. Moreover, the communication controller 13 is implemented by the audio input-output I/F 116 in response to an instruction from the CPU 101; and, after the voice of the user is converted into audio signals by the microphone 114, receives input of audio data related to the audio signals. Furthermore, the communication controller 13 is implemented by the audio input-output I/F 116 in response to an instruction from the CPU 101, and outputs the audio signals related to the audio data to the speaker and causes the speaker 115 to output the voice.

The display controller 17 is implemented by the display I/F 117 in response to an instruction from the CPU 101; and combines the received sets of image data having different resolutions and performs control to send the combined image data to the display 120. Thus, the display controller 17 can send information, which is received from the control device 50, to the display 120 and causes the display 120 to display the display.

The storing/reading unit 19 is either implemented using the SSD 105 in response to an instruction from the CPU 101 or implemented in response to an instruction from the CPU 101, and performs operations of storing a variety of data in the storage unit 1000 or the recording medium 1010 and reading a variety of data from the storage unit 1000 or the recording medium 1010. The storage unit 1000 is used to store a terminal ID (Identification), which enables identification of the terminal 10, and a password. Meanwhile, at least either the terminal ID or the password can be recorded in the recording medium 1010 and can be read by the storing/reading unit 19. In that case, the recording medium 1010 is an IC card (Integrated Circuit card) such as a SIM card (Subscriber Identity Module Card). Thus, by purchasing the recording medium 1010, the user of the terminal 10 can avail the provided communication service from the administrator of the management system 5.

Moreover, every time image data and audio data is received during the communication with the destination terminal, the received data is stored in the storage unit 1000 in an overwriting manner. Herein, an image is displayed on the display 120 using the pre-overwriting image data, and a voice is output from the speaker 115 using the pre-overwriting audio data.

The terminal ID according to the present embodiment is an example of identification information in the form of a word, or a character, or a symbol, or various signs. Herein, the identification information can be a combination of at least two items from among a word, a character, a symbol, and various signs. Moreover, instead of using the terminal ID, it is alternatively possible to use a user ID that enables identification of the user of the terminal 10. In that case, the terminal identification information contains not only the terminal ID but also the user ID.

### <Functional configuration of control device>

The control device 50 includes a transceiver 51, an authenticating unit 52, a manager 53, a searching unit 54, a session controller 58, and a storing/reading unit 59. Each of those constituent elements is a function or a functioning module that is implemented when one of the constituent elements illustrated in Fig. 6 performs operations by following the instructions from the CPU 501 according to the program that is meant for the control device 50 and that is loaded in the RAM 503 from the HD 504. Moreover, the control device 50 includes the storage unit 5000 that is configured using the HD 504.

The storage unit 5000 of the control device 50 is used to store area IDs of the areas (X, Y, and Z) in which the concerned control device 50 and the other control devices 50 are installed. For example, in the storage unit 5000, area ID "jp01" is stored that indicates Japan as the location of installation of the control device 50x; area ID "us01" is stored that indicates the USA as the location of installation of the control device 50y; and area ID "sg01" is stored that indicates Singapore as the location of installation of the control device 50z.

Moreover, in the storage unit 5000, following databases are stored: an authentication management DB 5001 that is built using an authentication management table; a terminal management DB 5002 that is built using a terminal management table; a destination list management DB 5003 that is built using a destination list management table; a session management DB 5004 that is built using a session management table; a relay device management DB 5011 that is built using a relay device management table; an operating status management DB 5012 that is built using an operating status management table; and a connection management DB 5013 that is built using a connection management table.

### (Authentication management table)

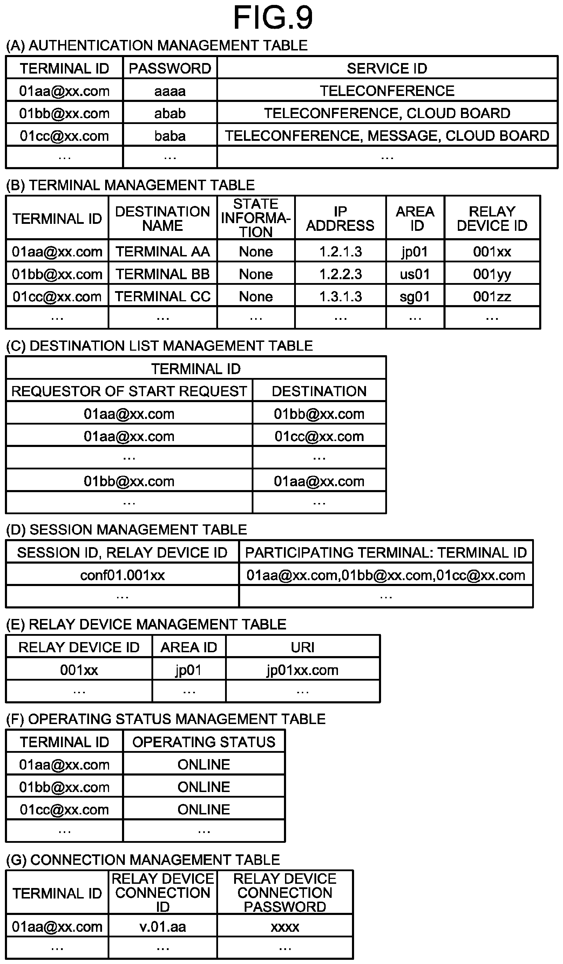

In Fig. 9, (A) is a conceptual diagram illustrating the authentication management table. In the authentication management table; terminal IDs enabling identification of the terminals 10; passwords; and service IDs of the services available in the terminals 10 are managed in a corresponding manner. In the following explanation, it is assumed that the terminals 10aa, 10bb, and 10cc have terminal IDs "01aa@xx.com, 01bb@xx.com, and 01cc@xx.com, respectively. However, the portion "@xx.com" included in the terminal IDs can be omitted because it is common among the terminals 10.

### (Terminal management table)

In Fig. 9, (B) is a conceptual diagram illustrating the terminal management table. In the terminal management table, with respect to the terminal ID of each terminal 10, the following information is managed in a corresponding manner: a destination name (for example, a terminal name); state information indicating the state of the concerned terminal 10; an IP address indicating the address of the concerned terminal 10; an area ID of the control device 50 to which the concerned terminal 10 is connected; and a relay device ID of the relay device 30 to which the concerned terminal 10 is connected.

### (Destination list management table)

In Fig. 9, (C) is a conceptual diagram illustrating the destination list management table. In the destination list management table, with respect to the terminal ID of a particular terminal 10 that issued a start request for starting communication, the terminal IDs of such terminals 10 are managed in a corresponding manner which represent destination candidates specifiable for the terminal 10 that issued the start request.

### (Session management table)

In Fig. 9, (D) is a conceptual diagram illustrating the session management table. In the session management table, with respect to a session ID enabling identification of a session sed, the terminal IDs of the terminals 10 that are participating in that session sed are managed in a corresponding manner. In the present embodiment, in a session sed, in the case of sending contents data among the terminals 10 via a plurality of relay devices 30, one of the relay devices 30 manages the entire relay of contents data and, with that relay device 30 representing the starting point, information indicating the relay destinations of contents data is provided to the other relay devices 30. For that reason, the session ID contains domain information (for example "001xx") indicating the relay device (for example, the relay device 30xx) that represents the starting point in the session sed.

### (Relay device management table)

In Fig. 9, (E) is a conceptual diagram illustrating the relay device management table. In the relay device management table, with respect to a relay device ID of each relay device 30, the area ID of the area of installation of that relay device 30 and the URI (Uniform Resource Identifier) of that relay device 30 are managed in a corresponding manner.

### (Operating status management table)

In Fig. 9, (F) is a conceptual diagram illustrating the operating status management table. In the operating status management table, with respect to the terminal ID of each terminal 10, the operating status (presence) of that terminal 10 is managed in a corresponding manner.

### (Connection management table)

In Fig. 9, (G) is a conceptual diagram illustrating the connection management table. In the connection management table, with respect to the terminal ID of each terminal 10, the following information is managed in a corresponding manner: a relay device connection ID that is generated every time when the terminal 10 establishes connection with a particular relay device 30; and a relay device connection password that is used in authenticating the terminal 10 when the terminal 10 establishes connection with that relay device 30.

### (Functional configurations in control device)

Given below is the detailed explanation of the functional configurations in the control device 50. While explaining the functional configurations in the control device 50, the explanation is given also about the relationship of such main constituent elements, from among the constituent elements illustrated in Fig. 6, which enable implementation of the functional configurations of the control device 50.

The transceiver 51 is implemented by the network I/F 509 in response to an instruction from the CPU 501, and performs transmission and reception of a variety of data (or information) with other terminals, devices, or systems via the communication network 2.

The authenticating unit 52 is implemented in response to an instruction from the CPU 501; and searches the authentication management table (see Fig. 9(A)) with the terminal ID and the password received by the transceiver 51 serving as the search keys, and authenticates the terminal 10 by determining whether or not the same terminal ID and the same password are managed in the authentication management table.

The manager 53 is implemented in response to an instruction from the CPU 501, and manages all management tables by adding a variety of information to and deleting a variety of information from the management tables.

The searching unit 54 is implemented in response to an instruction from the CPU 501, and performs a node search in order to search for the terminals 10 (nodes) connected to the other control devices 50.

The session controller 58 is implemented in response to an instruction from the CPU 501, and controls a session sed in which contents data is sent among the terminals 10. The abovementioned control includes the control for establishing a session sed, the control for causing the terminals 10 to participate in the session sed, and the control for terminating the session sed.

The storing/reading unit 59 is either implemented using the HDD 505 in response to an instruction from the CPU 501 or implemented in response to an instruction from the CPU 501, and performs operations of storing a variety of data in the storage unit 5000 and reading a variety of data from the storage unit 5000.

### <Functional configuration of common management device>

The common management device 60 includes a transceiver 61 and a storing/reading unit 69. Each of those constituent elements is a function or a functioning module that is implemented when one of the constituent elements illustrated in Fig. 6 performs operations by following the instructions from the CPU 501 according to the program that is meant for the common management device and that is loaded in the RAM 503 from the HD 504. Moreover, the common management device 60 includes a storage unit 6000 that is configured using the HD 504. In the storage unit 6000, following databases are stored: an authentication management DB 6001 that is built using an authentication management table; a terminal management DB 6002 that is built using a terminal management table; a destination list management DB 6003 that is built using a destination list management table; and a session management DB 6004 that is built using a session management table. Herein, the authentication management DB 6001, the terminal management DB 6002, the destination list management DB 6003, and the session management DB 6004 managed in the common management device are in synchronization with and are used to manage common information as the authentication management DB 5001, the terminal management DB 5002, the destination list management DB 5003, and the session management DB 5004, respectively, managed in the control device 50.

### (Functional configurations in common management device)

The transceiver 61 is implemented by the network I/F 509 in response to an instruction from the CPU 501, and performs transmission and reception of a variety of data (or information) with other terminals, devices, or systems via the communication network 2.

The storing/reading unit 69 is either implemented using the HDD 505 in response to an instruction from the CPU 501 or implemented in response to an instruction from the CPU 501, and performs operations of storing a variety of data in the storage unit 6000 and reading a variety of data from the storage unit 6000.

### <Functional configuration of relay device>

The relay device 30 includes a transceiver 31, an authenticating unit 32, and a storing/reading unit 39. Each of those constituent elements is a function or a functioning module that is implemented when one of the constituent elements illustrated in Fig. 6 performs operations by following the instructions from the CPU 501 according to the program that is meant for the common management device and that is loaded in the RAM 503 from the HD 504. Moreover, the relay device 30 includes a storage unit 3000 that is configured using the HD 504.

### (Functional configurations in common management device)

The transceiver 31 is implemented by the network I/F 509 in response to an instruction from the CPU 501, and performs transmission and reception of a variety of data (or information) with other terminals, devices, or systems via the communication network 2.

The authenticating unit 32 is implemented in response to an instruction from the CPU 501, and authenticates the terminal 10 by determining whether or not the group including the terminal ID, the relay device connection ID, and the relay device connection password is managed in the connection management table in the control device 50 (see Fig. 9(G)).

The storing/reading unit 39 is either implemented using the HDD 505 in response to an instruction from the CPU 501 or implemented in response to an instruction from the CPU 501, and performs operations of storing a variety of data in the storage unit 3000 and reading a variety of data from the storage unit 3000.

### «Processing or operations according to embodiment»

Given below is the detailed explanation of the processing or the operations performed by the terminal 10, the relay device 30, the control device 50, and the common management device 60 constituting the communication system 1.

### (Login operation)

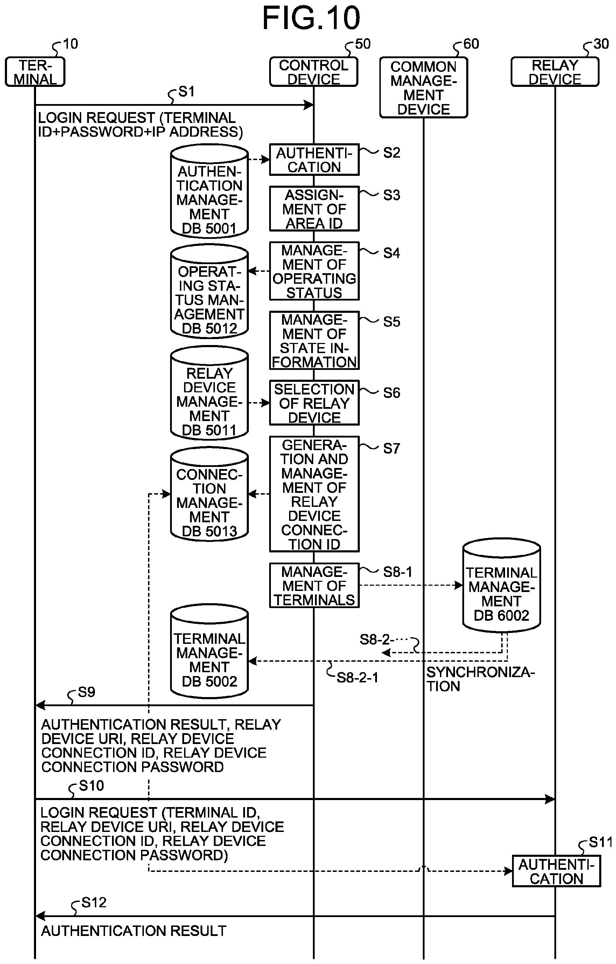

First, explained below with reference to Fig. 10 is an operation by which the terminal 10 logs in to the control device 50 and the relay device 30. Fig. 10 is a sequence diagram illustrating a login operation performed by the terminal 10.

According to the embodiment of the present invention, the terminal 10 can log in to any arbitrary control device 50 from among a plurality of control devices 50. There is no particular restriction on the method of selecting the control device 50 to which a particular terminal 10 issues a login request. Examples of that method include a method of selecting the control device 50 based on the information input in the concerned terminal 10; a method of selecting the closest control device 50 based on the physical position information of the concerned terminal 10; and a method of selecting the control device 50 using the GSLB (Global Server Load Balancing).

The transceiver 11 of the concerned terminal 10 sends a login request and the IP address of the concerned terminal 10 to an arbitrary control device 50 that has been selected (Step S1). The login request includes the terminal ID and the password of the terminal 10 that issued the login request. Moreover, when the terminal 10 issues a login request, the IP address thereof gets sent to the control device 50 to which the login request is issued. As a result, the transceiver 51 of the concerned control device 50 receives the login request, which includes the terminal ID and the password, and the IP address of the terminal 10.

Then, the authenticating unit 52 refers to the authentication management table (Fig. 9(A)) and authenticates the terminal 10 that issued the login request (Step S2). Herein, if the set of the terminal ID and the password received from the terminal 10 that issued the login request is also being managed in the authentication management table, then the authenticating unit 52 successfully authenticates the terminal 10 that issued the login request. However, if the set of the terminal ID and the password received from the terminal 10 that issued the login request is not being managed in the authentication management table, then the authenticating unit 52 fails in authenticating the terminal 10 that issued the login request. The following explanation is given for the case in which the authentication is successful.

As part of the operation performed at Step S2, the storing/reading unit 59 searches the authentication management table with the terminal ID and the password of the terminal 10 that issued the login request serving as the search keys, and reads the corresponding service ID.

Subsequently, the manager 53 assigns, to the terminal 10 that issued the login request, the area ID indicating the area in which the concerned control device 50 is installed (Step S3). The area ID is stored in advance in the storage unit 5000 of the control device 50. For example, if the control device 50 that receives the login request is installed in the area X (Japan), then the manager 53 assigns "jp01" as the area ID to the terminal 10 that issued the login request.

Then, in response to a request from the manager 53, the storing/reading unit 59 stores, in the operating status management table (see Fig. 9(F)), the operating status "Online" in a corresponding manner to the terminal ID of the terminal 10 that issued the login request (Step S4).

Moreover, the manager 53 manages the state of communication of the terminal 10, which issued the login request, according to the rules of state transition illustrated in the state transition diagram illustrated in Fig. 2 (Step S5). That is, at Step S4, when the operating status is set to "Online", the manager 53 decides on "None" as the state information indicating the new state of the terminal 10 that issued the login request (See Fig. 2).

At Step S3, if the service ID read at Step S2 indicates "videoconference", then the session controller 58 selects the relay device 30 representing the connection destination of the terminal 10 that issued the login request (Step S6). In that case, as the relay device 30 representing the connection destination of the terminal 10 that issued the login request, the session controller 58 selects, from the session management table, the relay device 30 that is identified by the relay device ID managed in a corresponding manner to the area ID (for example, "jp01") of the area (for example, the area X) in which the concerned control device 50 is installed, that is, the relay device 30 that is installed in the same area as the concerned control device 50. Meanwhile, when a plurality of relay devices 30 is installed in the same area as the concerned control device 50, there is no particular restriction on the method of selecting the relay device 30. Examples of that method include a method of selection in the round robin manner and the method of selection based on the load of each relay device 30. Moreover, as part of the operation performed at Step S6, the storing/reading unit 59 searches the relay device management table (see Fig. 9(E)) with the relay device ID of the selected relay device 30 serving as the search key, and reads the corresponding URI.

Furthermore, the session controller 58 of the control device 50 generates a relay device connection ID that is used at the time when the terminal 10 that issued the login request establishes connection with the relay device 30 selected at Step S5 (Step S7). As part of the operation performed at Step S7, the storing/reading unit 59 stores, in the connection management table (see Fig. 9(G)), the generated relay device connection ID and a relay device connection password in a corresponding manner to the terminal ID of the terminal 10 that issued the login request. Herein, the relay device connection password either can be determined in advance for each relay device 30, or can be generated every time a particular terminal 10 establishes connection with a particular relay device 30.

The transceiver 51 of the control device 50 issues an updating request for updating the terminal management table to the common management device 60 (Step S8-1). The updating request includes the terminal ID and IP address of the terminal 10 that issued the login request; the area ID assigned at Step S3; the state information determined at Step S5; and the relay device ID of the relay device 30 selected at Step S6. When the transceiver 61 of the common management device 60 receives the updating request, the storing/reading unit 69 stores, in the terminal management table (see Fig. 9(B)) managed in the common management device 60, the following information in a corresponding manner: the terminal ID, the IP address, the state information, the area ID, and the relay device ID included in the updating request.

Subsequently, the transceiver 61 of the common management device 60 sends, to the control devices 50x, 50y, and 50z constituting the communication system 1, the updated contents of the terminal management table including the terminal ID, the state information, the area ID, and the relay device ID. When the transceiver 51 of each of the control devices 50x, 50y, and 50z receives the updated contents, the storing/reading unit 59 of each control device 50 updates the terminal management table, which is managed in that control device 50, based on the received updated contents. As a result, the terminal management table in each of the control devices 50x, 50y, and 50z gets synchronized with the terminal management table managed in the common management device 60 (Steps S8-2-1, S8-2-...).

Then, the transceiver 51 of the control device 50 sends, to the terminal 10 that issued the login request, the authentication result indicating that the authentication was successful; the URI of the relay device 30 as read at Step S6; and the relay device connection ID and the relay device connection password as generated at Step S7 (Step S9).

Upon receiving the URI, the relay device connection ID, and the relay device connection password from the control device 50; the transceiver 11 of the terminal 10 issues a login request to the relay device 30 specified by the URI (Step S10). The login request includes the terminal ID of the terminal 10 that issued the login request, and includes the relay device connection ID and the relay device connection password received from the control device 50.

In the relay device 30 that receives the login request, the authenticating unit 32 authenticates the terminal 10 that issued the login request (Step S11). In this case, using the transceiver 31, the authenticating unit 32 inquires, with the control device 50 installed in the same area as the concerned relay device, whether or not the group of the terminal ID, the relay device connection ID, and the relay device connection password included in the login request is also managed in the connection management table in the control device 50 (see Fig. 9(G)). In the control device 50 that receives the inquiry, the manager 53 refers to the connection management table and sends the result about the inquiry to the relay device 30 using the transceiver 51. If the group of the terminal ID, the relay device connection ID, and the relay device connection password included in the login request is also managed in the connection management table in the control device 50, then the authenticating unit 32 successfully authenticates the terminal 10 that issued the login request. However, if the group of the terminal ID, the relay device connection ID, and the relay device connection password included in the login request is not managed in the connection management table in the control device 50, then the authenticating unit 32 fails in authenticating the terminal 10 that issued the login request. The transceiver 31 of the relay device 30 sends the authentication result to the terminal 10 that issued the login request (Step S12).

The following explanation is given about the case of successful authentication.

### (Destination list request)

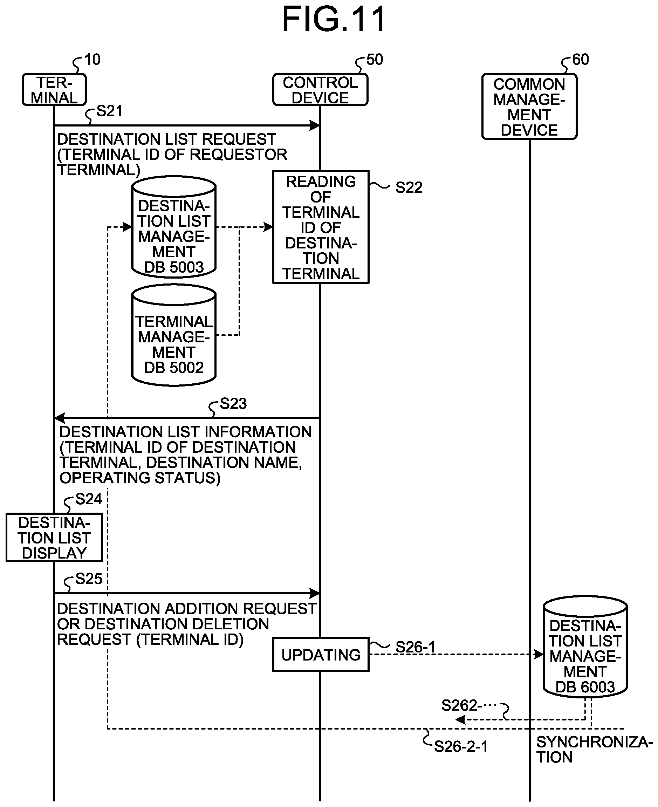

Explained below with reference to Fig. 11 are the operations performed to displaying, in the terminal 10, a destination list of destination candidates for the concerned terminal 10. Fig. 11 is a sequence diagram for explaining the operations performed to display a destination list in the terminal. When the authentication result is received by the terminal 10; the corresponding transceiver 11 issues, to the control device 50 via the transceiver 11, a destination list request that includes the terminal ID of the concerned terminal 10 and that represents a request for a destination list (Step S21). Thus, the transceiver 51 of the control device 50 receives the destination list request.

Subsequently, the storing/reading unit 59 searches the destination list management table (see Fig. 9(C)) with the terminal ID of the terminal 10 that issued the destination list request serving as the search key, and extracts the terminal IDs of destination candidate terminals 10 which are specifiable as the destination by the terminal 10 that issued the destination list request (Step S22). Moreover, the storing/reading unit 59 searches the terminal management table (see Fig. 9(B)) with the extracted terminal IDs serving as the search keys, and reads the destination names. Then, the transceiver 51 of the control device 50 sends the terminal IDs of the destination candidate terminals 10 and the destination names, which are read by the storing/reading unit 59, to the terminal 10 that issued the destination list request (Step S23).

When destination list information is received by the transceiver 11 of the terminal 10 that issued the destination list request; the corresponding display controller 17 displays, on the display 120, a destination list, in which specifiable destination candidate names are reflected, based on the terminal IDs and the destination names included in the destination list information (see Fig. 3) (Step S24).

According to the embodiment of the present invention, in the case of adding a destination candidate to the destination list or deleting a destination candidate from the destination list, the terminal 10 issues a destination-list-management-table updating request, which includes the terminal ID of the destination candidate terminal 10 to be added or deleted and the terminal ID of the concerned terminal, to the control device 50 (Step S25). In the control device 50 that receives the updating request, in response to a request from the manager 53, the transceiver 51 sends the destination-list-management-table updating request to the common management device 60 (Step S26-1). This updating request includes the terminal ID of the terminal 10 that issued the updating request and the terminal ID of the destination candidate terminal 10 to be added or deleted. Then, the storing/reading unit 69 of the common management device 60 adds, in the destination list management table, the terminal ID of the to-be-added destination candidate, which is included in the updating request, as the terminal ID of a destination candidate associated with the terminal ID of the terminal 10 that issued the updating request. Alternatively, the storing/reading unit 69 of the common management device 60 deletes, from the destination list management table, the terminal ID of the to-be-deleted destination candidate, which is included in the updating request, from among the terminal IDs of the destination candidates associated with the terminal ID of the terminal 10 that issued the updating request.

Subsequently, the transceiver 61 of the common management device 60 sends, to the control devices 50x, 50y, and 50z constituting the communication system 1, the updated contents of the destination list management table. When the transceiver 51 of each of the control devices 50x, 50y, and 50z receives the updated contents, the storing/reading unit 59 of each control device 50 updates the destination list management table, which is managed in that control device 50, based on the received updated contents. As a result, the destination list management table in each of the control devices 50x, 50y, and 50z gets synchronized with the destination list management table managed in the common management device 60 (Steps S26-2-1, S26-2-...).

### (Operating status management)

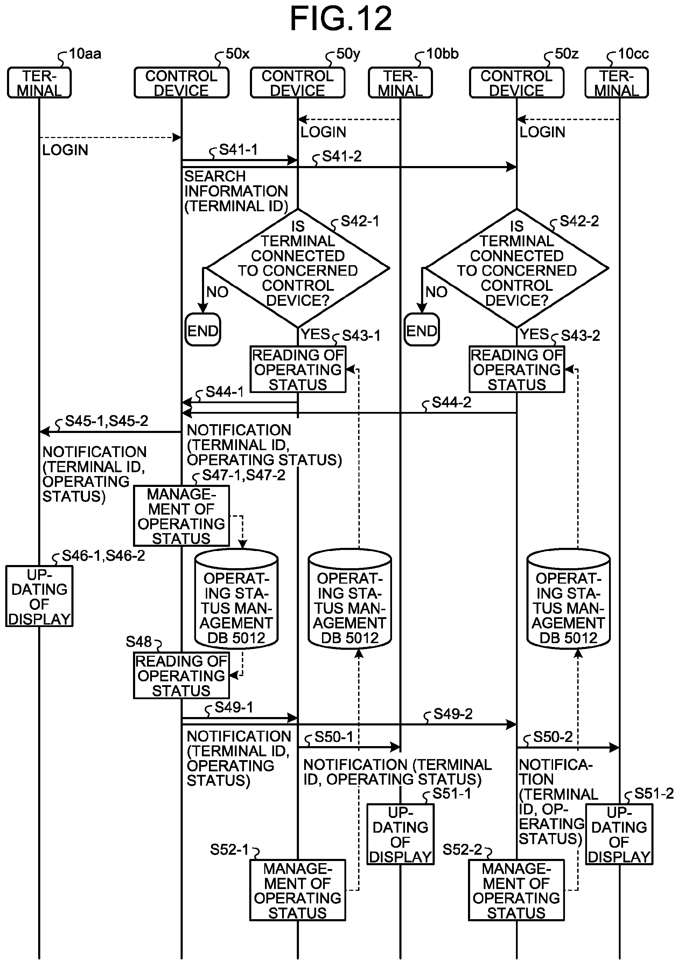

Explained below, as an example of an internode cooperation operation, with reference to Fig. 12 are the operations in which the operating statuses of the terminals 10 as managed in the control devices 50x, 50y, and 50z constituting the management system 5 are synchronized among the control devices 50x, 50y, and 50z. Fig. 12 is a sequence diagram for explaining the operations of synchronizing the operating statuses among the control devices.

When a particular terminal 10 (herein, assumed to be the terminal 10aa) logs in to a particular control device 50 (herein, assumed to be the control device 50x), the searching unit 54 of the control device 50x performs a node search to search for the destination candidate terminals 10 (herein, assumed to be the terminals 10bb and 10cc (Steps S41-1 and S41-2). The node search is performed in order to get to know the control devices 50 to which the destination candidate terminals 10, which are not connected to the concerned control device 50, are connected. Thus, the node search is performed with respect to such terminals from among the destination candidate terminals 10 which are not connected to the concerned control device 50.

In the case of performing a node search, in response to a request from the searching unit 54 of the control device 50x, the corresponding transceiver 51 sends search information regarding a node search to the other control devices 50y and 50z. The search information contains the terminal ID of the terminal 10aa that is connected to the control device 50x, and contains the terminal IDs of the destination candidate terminals 10bb and 10cc that are not connected to the control device 50x.

When the transceiver 51 of each of the control devices 50y and 50z receives the search information, the corresponding session controller 58 determines whether or not the terminals 10bb and 10cc, which are identified by the terminal IDs included in the search information, are connected to the control device 50x (Steps S42-1 and S42-2). Regarding the method for determining the connection with a particular terminal 10, there is no particular restriction and any known method can be implemented. Examples of the method include a method in which, in a session sei, the determination is performed based on whether or not a period of time exceeding a predetermined threshold value has elapsed since the last time of reception of information that is periodically sent by the terminal 10. If the session controller 58 determines that the terminal 10bb or the terminal 10cc that is identified by a terminal ID is not connected to the concerned control device 50 (No at Steps S42-1 and S42-2), then that control device 50 ends the operations without sending a response to the control device 50 which sent the search information. The following explanation is given for the case in which the session controller 58 determines that the terminal 10bb or the terminal 10cc that is identified by a terminal ID is connected to the concerned control device 50 (Yes at Steps S42-1 and S42-2).

The storing/reading unit 59 of each of the control devices 50y and 50z reads, from the operating status management table (see Fig. 9(F)), the operating status corresponding to the terminal ID of the terminal 10 of the terminal 10bb or the terminal 10cc that is connected to the concerned control device 50 from among the destination candidate terminals 10 specified in the search information (Steps S43-1 and S43-2).

Subsequently, the transceiver 51 of each of the control devices 50y and 50z sends, to the control device 50x, a notification about the terminal ID of the terminal 10bb or the terminal 10cc that is connected to the concerned control device 50 and about the operating status read at Step S43-1 or Step S43-2 (Steps S44-1 and S44-2). When the transceiver 51 of the control device 50x receives each notification, the corresponding searching unit 54 identifies the control device 50 that sent the notification as the connection destination of the terminal 10bb or the terminal 10cc identified by the terminal ID specified in the notification. Then, the transceiver 11 sends the received notifications to the terminal 10aa that has performed login (Steps S45-1 and S45-2). When the transceiver 11 of the terminal 10aa receives the notifications, the display controller 17 updates, based on the terminal IDs and the operating statuses of the destination candidate terminals 10bb and 10cc specified in the notifications, the icons representing the operating statuses of the destination candidate terminals 10bb and 10cc in the destination list (see Fig. 3) (Steps S46-1 and S46-2).

Meanwhile, in the control device 50x, in response to a request from the manager 53, the storing/reading unit 59 stores, in the operating status management table managed in the concerned control device 50, the operating statuses, which are specified in the notifications received from the control devices 50y and 50z, in a corresponding manner to the terminal IDs of the terminals 10bb and 10cc specified in the notifications (Steps S47-1 and S47-2). As a result, the control device 50x becomes able to know the operating statuses of the destination candidate terminals 10bb and 10cc of the terminal 10aa that is connected to the control device 50x.

Moreover, the storing/reading unit 59 of the control device 50x reads, from the operating status management table, the operating status corresponding to the terminal ID of the terminal 10aa that is connected to the control device 50x (Step S48). Then, the transceiver 51 of the control device 50x sends, to the control devices 50y and 50z representing the connection destinations of the destination candidate terminals 10bb and 10cc, respectively, the terminal ID of the terminal 10aa and the operating status read at Step S48 (Step S49-1 and S49-2). Upon receiving the notification, the transceiver 51 of each of the control devices 50y and 50z sends the received notification to the terminal 10bb or the terminal 10cc connected to the concerned control device 50 (Steps S50-1 and S50-2). When the transceiver 11 of each of the terminals 10bb and 10cc receives the notification, the corresponding display controller 17 updates, based on the terminal ID and the operating status of the terminal 10aa as specified in the notification, the icon representing the operating status of the terminal 10aa in the destination list (Steps S51-1 and S51-2).

Moreover, in each of the control devices 50y and 50z, in response to a request from the corresponding manager 53, the corresponding storing/reading unit 59 updates, in the operating status management table managed in the concerned control device 50, the operating status of the terminal 10aa based on the notification received from the control device 50x (Steps S52-1 and S52-2). As a result, each of the control devices 50y and 50z becomes able to know the operating status of the terminal 10aa that is connected to the control device 50x.

Meanwhile, every time there is updating of the operating status of the terminal 10 that is connected to a particular control device 50, the control devices 50 and the terminals 10 repeatedly perform the operations from Step S43-1 to Step S47-1, the operations from Step S43-2 to Step S47-2, and the operations from Step S48 to Steps S52-1 and S52-2. As a result, each control device 50, each terminal 10, and the user of each terminal 10 become able to know the latest operating status of each terminal 10.

### (Establishment of session sed)

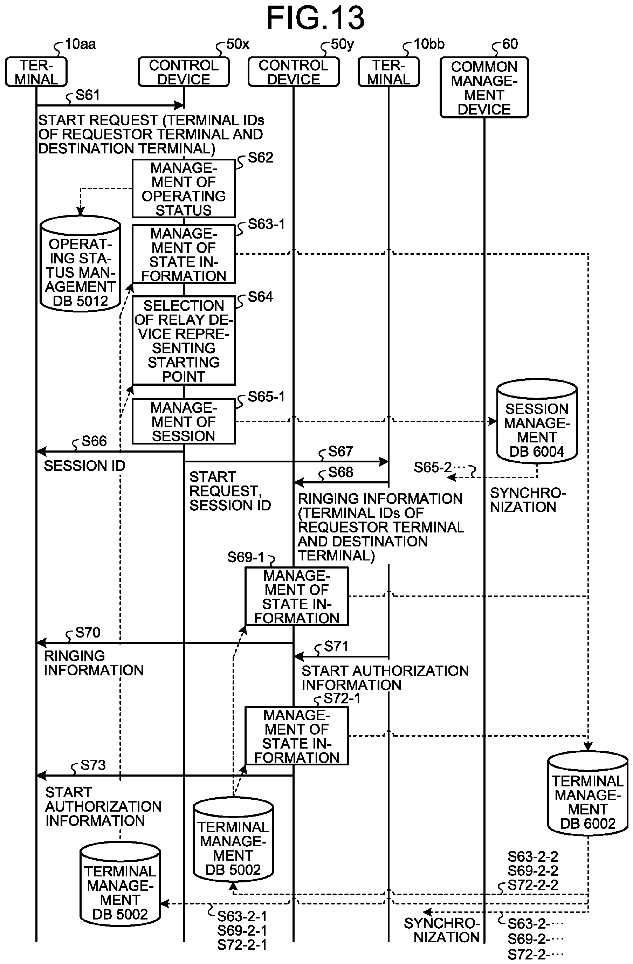

Explained below with reference to Fig. 13 are the operations for sending information among the terminals 10 in order to establish a session sed. Fig. 13 is a sequence diagram for explaining the operations for sending information among the terminals 10. The following explanation is given for the case in which the terminal 10aa, which is connected to the control device 50x, issues a start request for starting communication with the terminal 10bb, which is connected to the control device 50y and which represents the destination.

In response to a user operation of the operation button 108, the transceiver 11 of the terminal 10aa issues a start request for starting communication to the control device 50x (Step S61). The start request for starting communication includes the terminal ID "01aa" of the terminal 10aa that issued the start request for starting communication, and includes the terminal ID "01bb" of the destination terminal 10bb.

When the transceiver 51 of the control device 50x receives the start request, in response to a request from the manager 53, the storing/reading unit 59 stores, in the operating status management table (see Fig. 9(F)), the operating status "Online (in a call)" in a corresponding manner to the terminal ID of the terminal 10aa that issued the start request (Step S62). The updated operating status "Online (in a call)" is notified to the destination candidate terminals 10 of the terminal 10aa as a result of the operations performed from Step S48 to Steps S52-1 and S52-2.

Moreover, the manager 53 manages the state of communication of the terminal 10 according to the rules of state transition illustrated in the state transition diagram in Fig. 2 (Step S63-1). That is, at Step S61, in response to the start request received by the control device 50x, the manager 53 decides on "Inviting" as the state information indicating the new state of the terminal 10aa that issued the start request, and decides on "Invited" as the state information indicating the new state of the destination terminal 10bb. Then, the manager 53 issues, to the common management device 60, an updating request that is meant for updating the terminal management table and that includes the state information "Inviting" and "Invited" indicating the new states of the terminal 10aa that issued the start request and the destination terminal 10bb, respectively, in a corresponding manner to the terminal IDs of the terminals 10aa and 10bb.

When the transceiver 61 of the common management device 60 receives the updating request, the storing/reading unit 69 stores the terminal IDs and the sets of state information, which are included in the updating request, in a corresponding manner in the terminal management table (see Fig. 9(B)) managed in the common management device 60. Then, as a result of performing the operations identical to Steps S8-2-1, S8-2-...; the terminal management table managed in each of the control devices 50x, 50y, and 50z gets synchronized with the terminal management table managed in the common management device 60 (Steps S63-2-1, S63-2-2, S63-2-...).

Subsequently, the session controller 58 selects, from among the relay devices 30xx and 30yy connected to the terminals 10aa and 10bb, respectively, the relay device 30 representing the starting point in the session sed (Step S64). In the session sed established between the terminals 10aa and 10bb, the two relay devices 30xx and 30yy relay the contents data. Of those relay devices 30, the relay device 30 that is selected at Step S64 entirely manages the relay destinations (destinations) of in-session contents among the nodes (the terminals 10 and the relay devices 30). That is, with the selected relay device 30 representing the starting point, information indicating the relay destinations of contents data is provided to the other relay devices 30. Meanwhile, there is no restriction on the method for selecting the relay device 30 at Step S64. In the present embodiment, the explanation is given under the assumption that the relay device 30xx, to which the terminal 10 that issued the start request is connected, is selected.

Subsequently, the manager 53 manages the information related to the session sed established between the terminals 10aa and 10bb (Step S65-1). First, the manager 53 generates a session ID for enabling identification of the session sed established between the terminals 10aa and 10bb. In this case, the manager 53 generates a session ID (for example, "conf01.001xx") that includes the information (for example, "001xx") indicating the relay device 30xx that represents the starting point selected at Step S64. Then, in response to a request from the manager 53, the transceiver 61 of the common management device 60 issues, to the common management device 60, an updating request that is for updating the session management table (see Fig. 9(D)) and that includes the generated session ID; the terminal ID of the terminal 10aa that issued the start request; and the terminal ID of the destination terminal 10bb.

When the transceiver 61 of the common management device 60 receives the updating request, the storing/reading unit 69 stores, in the session management table managed in the common management device 60, the session ID and the terminal IDs included in the updating request. Then, the transceiver 61 sends the updated contents of the session management table to the control devices 50x, 50y, and 50z constituting the communication system 1. When the transceiver 51 of each of the control devices 50x, 50y, and 50z receives the updated contents, the corresponding storing/reading unit 59 updates, based on the updated contents, the session management table managed in the concerned control device 50. As a result, the terminal management table managed in each of the control devices 50x, 50y, and 50z gets synchronized with the session management table managed in the common management device 60 (Step S65-2-...).

Moreover, the transceiver 51 of the control device 50x sends the session ID, which is generated at Step S65-1, to the terminal 10aa that issued the start request (Step S66). Furthermore, the transceiver 51 of the control device 50x sends the start request, which is received from the terminal 10aa that issued the start request, and the session ID to the destination terminal 10bb (Step S67). Meanwhile, based on the IP address of the terminal 10bb as received from the common management device 60, the terminal management table (see Fig. 9(B)) managed in the control device 50x becomes synchronous with the terminal management table managed in the common management device 60 and is used in managing the IP address of the destination terminal 10bb. For that reason, the transceiver 51 of the control device 50x can send the start request directly to the terminal 10bb without having to make any inquiry about the IP address to the control device 50y that is the connection destination of the destination terminal 10bb or without having to perform communication via the control device 50y.

When the transceiver 11 of the destination terminal 10bb receives the start request, the corresponding communication controller 13 causes the speaker 115 to output an audible ringing tone. Then, the transceiver 11 of the terminal 10bb sends ringing information, which indicates that an audible ringing tone is output, to the control device 50y representing the connection destination of the terminal 10bb (Step S68). The ringing information contains the terminal ID of the terminal 10aa that issued the start request and the terminal ID of the destination terminal 10bb.

When the transceiver 51 of the control device 50y receives the ringing information, the corresponding manager 53 manages the state of communication of the terminals 10 according to the rules of state transition illustrated in the state transition diagram in Fig. 2 (Step S69-1). That is, at Step S68, based on the ringing information received by the control device 50y, the manager 53 decides on "Calling" as the state information indicating the new state of the terminal 10aa that issued the start request and decides on "Ringing" as the state information indicating the new state of the destination terminal 10bb. Then, the manager 53 issues, to the common management device 60, an updating request that is meant for updating the terminal management table and that includes the state information "Calling" and "Ringing" indicating the new states of the terminal 10aa that issued the start request and the destination terminal 10bb, respectively, in a corresponding manner to the terminal IDs of the terminals 10aa and 10bb.

When the transceiver 61 of the common management device 60 receives the updating request, the storing/reading unit 69 stores the terminal IDs and the sets of state information, which are included in the updating request, in a corresponding manner in the terminal management table (see Fig. 9(B)) managed in the common management device 60. Then, as a result of performing the operations identical to Steps S8-2-1, S8-2-...; the terminal management table managed in each of the control devices 50x, 50y, and 50z gets synchronized with the terminal management table managed in the common management device 60 (Steps S69-2-1, S69-2-2, S69-2-...).

Subsequently, the transceiver 51 of the control device 50y sends the ringing information, which is received from the destination terminal 10bb, to the terminal 10aa that issued the start request (Step S70). Meanwhile, since the terminal management table (see Fig. 9(B)) managed in the control device 50y is synchronous with the terminal management table managed in the common management device 60 based on the information received from the common management device 60, the IP address of the terminal 10aa that issued the start request is managed in the terminal management table in the control device 50y. For that reason, the transceiver 51 of the control device 50y can send the ringing information directly to the terminal 10aa without having to make any inquiry about the IP address to the control device 50x that is the connection destination of the destination terminal 10aa or without having to perform communication via the control device 50x.

Meanwhile, in the destination terminal 10bb, when the receiver 12 receives authorization for starting communication based on an input operation of the user, the transceiver 11 sends start authorization information, which indicates authorization for starting communication, to the control device 50y representing the connection destination of the terminal 10bb (Step S71). The start authorization information contains the terminal ID of the terminal 10aa that issued the start request and the terminal ID of the destination terminal 10bb.

When the transceiver 51 of the control device 50y receives the start authorization information, the corresponding manager 53 performs an operation identical to Step S69 and, based on the start authorization information that is received, decides on "Accepted" as the state information indicating the new state of the terminal 10aa, which issued the start request, and the destination terminal 10bb. Then, the manager 53 issues, to the common management device 60, an updating request that is meant for updating the terminal management table and that includes the state information "Accepted" indicating the new state of the terminal 10aa, which issued the start request, and the destination terminal 10bb in a corresponding manner to the terminal IDs of the terminals 10aa and 10bb (Step S72-1).

When the transceiver 61 of the common management device 60 receives the updating request, the storing/reading unit 69 stores the terminal IDs and the sets of state information, which are included in the updating request, in a corresponding manner in the terminal management table (see Fig. 9(B)) managed in the common management device 60. Then, as a result of performing the operations identical to Steps S8-2-1, S8-2-...; the terminal management table managed in each of the control devices 50x, 50y, and 50z gets synchronized with the terminal management table managed in the common management device 60 (Steps S72-2-1, S72-2-2, S72-2-...).

Subsequently, the transceiver 51 of the control device 50y performs an operation identical to Step S70 and sends the start authorization information, which is received from the destination terminal 10bb, to the terminal 10aa that issued the start request (Step S73).

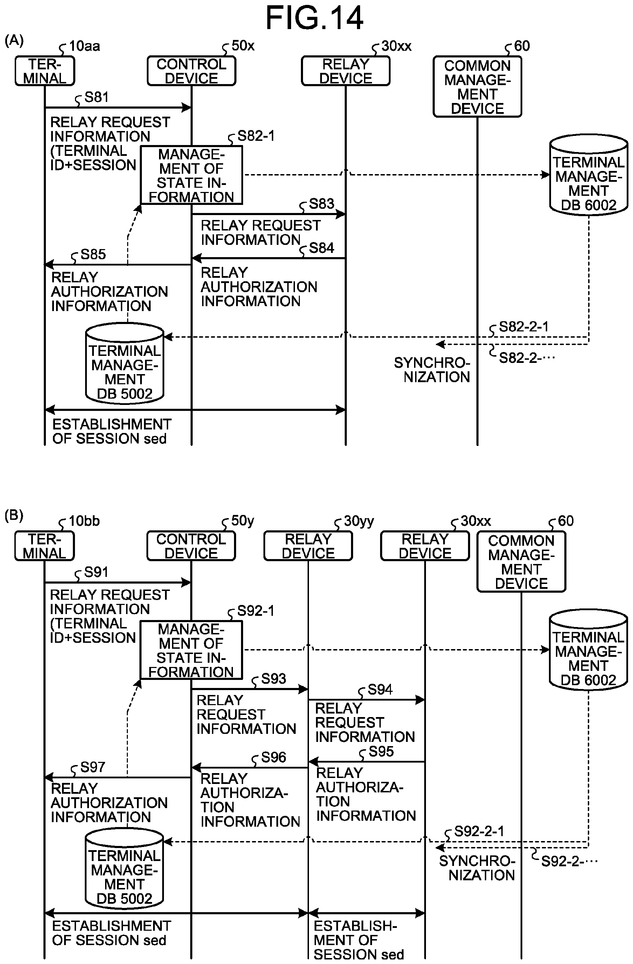

Explained below with reference to Fig. 14 are the operations by which the terminal 10aa, which issued the start request, and the destination terminal 10bb request the relay devices 30xx and 30yy, which represent the respective connection destinations, to start the relay of contents data. In Fig. 14, each figure is a sequence diagram for explaining the operations for starting the relay of contents data.

First, explained below with reference to (A) in Fig. 14 are the operations for establishing a session sed between the terminal 10aa and the relay device 30xx for the purpose of starting the relay of contents data between the terminals 10aa and 10bb. Upon receiving the start authorization information (see Step S73), the transceiver 11 of the terminal 10aa, which issued the start request, sends relay request information, which indicates a request to start the relay of contents data, to the control device 50x (Step S81). The relay request information contains the terminal ID of the terminal 10aa that issued the relay request and the session ID "conf01.001 xx" received at Step S66.

When the transceiver 51 of the control device 50x receives the relay request information, the corresponding manager 53 performs an operation identical to Step S63-1 and, based on the relay request information that is received, decides on "Busy" as the state information indicating the new state of the terminal 10aa that issued the relay request. Then, the manager 53 issues, to the common management device 60, an updating request that is meant for updating the terminal management table and that includes the terminal ID of the terminal 10aa, which issued the relay request, and the state information "Busy" indicating the new state of the terminal 10aa (Step S82-1).

When the transceiver 61 of the common management device 60 receives such information, the storing/reading unit 69 stores the terminal ID and the state information, which are included in the updating request, in a corresponding manner in the terminal management table (see Fig. 9(B)) managed in the common management device 60. Then, as a result of performing the operations identical to Steps S8-2-1, S8-2-...; the terminal management table managed in each of the control devices 50x, 50y, and 50z gets synchronized with the terminal management table managed in the common management device 60 (Steps S82-2-1, S82-2-...).

Subsequently, based on the relay device ID "001xx" associated with the terminal ID of the terminal 10aa, which issued the relay request, in the terminal management table (see Fig. 9(B)) managed in the control device 50x, the transceiver 51 of the control device 50x sends the relay request information, which is received from the terminal 10aa that issued the relay request, to the relay device 30xx identified by the relay device ID "001xx" (Step S83). In response to the relay request information, the transceiver 31 of the relay device 30xx sends relay authorization information, which indicates authorization for the relay, to the control device 50x (Step S84). Upon receiving the relay authorization information sent by the relay device 30xx, the transceiver 51 of the control device 50x sends the relay authorization information to the terminal 10aa that issued the relay request (Step S85).

Meanwhile, when the transceiver 31 of the relay device 30xx receives the relay request information, the relay device 30xx becomes able to know that the terminal 10aa, which issued the relay request, is participating in the session identified by the session ID included in the relay request information. As a result, the relay device 30xx starts relaying the contents data that is received from the terminal 10aa to the other terminals 10 participating in the same session as the session in which the terminal 10aa is participating, as well as starts sending the contents data that is received from the other terminals 10 to the terminal 10aa. In this way, the session sed between the terminal 10aa and the relay device 30xx gets established.

Explained below with reference to (B) in Fig. 14 are the operations for establishing the session sed between the terminal 10bb and the relay device 30yy and between the relay devices 30xx and 30yy for the purpose of starting the relay of contents data between the terminals 10aa and 10bb. Upon receiving the start authorization information (see Step S71), the transceiver 11 of the terminal 10bb sends relay request information, which indicates a request to start the relay of contents data, to the control device 50y (Step S91). The relay request information contains the terminal ID of the terminal 10bb that issued the relay request and the session ID "conf01.001xx" received at Step S67.

When the transceiver 51 of the control device 50y receives the relay request information, the corresponding manager 53 performs an operation identical to Step S69-1 and, based on the relay request information that is received, decides on "Busy" as the state information indicating the new state of the terminal 10bb that issued the relay request. Then, the manager 53 issues, to the common management device 60, an updating request that is meant for updating the terminal management table and that includes the terminal ID of the terminal 10bb, which issued the relay request, and the state information "Busy" indicating the new state of the terminal 10bb (Step S92-1).

When the transceiver 61 of the common management device 60 receives the updating request, the storing/reading unit 69 stores the terminal ID and the state information, which are included in the updating request, in a corresponding manner in the terminal management table (see Fig. 9(B)) managed in the common management device 60. Then, as a result of performing the operations identical to Steps S8-2-1, S8-2-..., the terminal management table managed in each of the control devices 50x, 50y, and 50z gets synchronized with the terminal management table managed in the common management device 60 (Steps S92-2-1, S92-2-...).

Subsequently, based on a relay device ID "001yy" associated with the terminal ID of the terminal 10bb, which issued the relay request, in the terminal management table (see Fig. 9(B)) managed in the control device 50y, the transceiver 51 of the control device 50y sends the relay request information, which is received from the terminal 10bb that issued the relay request, to the relay device 30yy identified by the relay device ID "001yy" (Step S93). Since the session ID "conf01.001xx" that is specified in the relay request information includes the information "001xx" indicating the relay device 30xx that represents the starting point, the relay device 30yy that receives the relay request information becomes able to know that the relay device 30xx is the starting relay device 30 in the session sed. Thus, the transceiver 31 of the relay device 30yy sends the relay request information, which is received from the control device 50y, to the relay device 30xx representing the starting point (Step S94).

In response to the relay request information, the transceiver 31 of the relay device 30xx sends relay authorization information, which indicates authorization for the relay, to the relay device 30yy (Step S95). Then, in response to the relay request information, the transceiver 31 of the relay device 30yy sends relay authorization information, which indicates authorization for the relay, to the control device 50y (Step S96). Upon receiving the relay authorization information sent by the relay device 30yy, the transceiver 51 of the control device 50y sends the relay authorization information to the terminal 10bb that issued the relay request (Step S97).

When the transceiver 31 of the relay device 30xx receives the relay request information, the relay device 30xx becomes able to know that the terminal 10bb, which is connected to the relay device 30yy, is participating in the session that is identified by the session ID specified in the relay request information. Thus, based on the relay devices 30 to which the terminals 10 participating in the session sed are connected, the relay device 30xx determines the transmission path for sending contents data and notifies the relay device 30yy about the transmission path. For example, the relay device 30xx issues, to the relay device 30yy, a request for sending the contents data received from the terminal 10bb to the relay device 30xx and for sending the contents data received from the relay device 30xx to the terminal 10bb. As a result, the relay device 30yy starts sending the contents data received from the terminal 10bb to the relay device 30xx, as well as starts sending the contents data of the terminal 10aa as received from the relay device 30xx to the terminal 10bb. In this way, the session sed gets established between the terminal 10bb and the relay device 30yy and between the relay devices 30xx and 30yy.

When the session sed is established between the terminal 10aa and the relay device 30xx, between the terminal 10bb and the relay device 30yy, and between the relay devices 30xx and 30yy, mutual transmission of contents data can be performed between the terminals 10aa and 10bb.

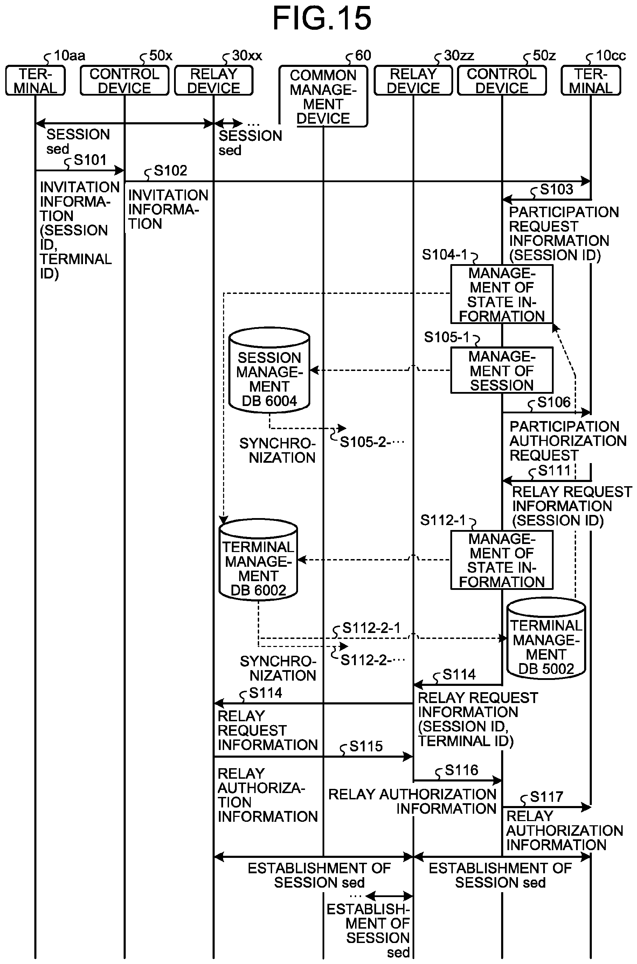

Explained below with reference to Fig. 15 are the operations by which the terminal 10cc that is connected to the relay device 30zz participates in the session sed after the establishment of the session sed between the terminal 10aa and the relay device 30xx, between the terminal 10bb and the relay device 30yy, and between the relay devices 30xx and 30yy. Fig. 15 is a sequence diagram for explaining the operations by which the terminal 10 participates in the session sed.

First, in the terminal 10aa that is participating in the session sed, when the receiver 12 receives a user request for inviting the terminal 10cc to join the session sed, the transceiver 11 sends invitation information, which indicates an invitation for the terminal 10cc to join the session sed, to the control device 50x that is the connection destination of the terminal 10aa (Step S101). The invitation information contains the session ID of the session sed and the terminal ID of the terminal 10cc to be invited.

Upon receiving the invitation information from the terminal 10aa, the transceiver 51 of the control device 50x sends the invitation information to the terminal 10cc based on the terminal ID specified in the invitation information (Step S102). Meanwhile, based on the information received from the common management device 60, the terminal management table (see Fig. 9(B)) managed in the control device 50x is synchronous with the terminal management table managed in the common management device 60 and is used in managing the IP address of the destination terminal 10cc. For that reason, the transceiver 51 of the control device 50x can send the invitation information directly to the terminal 10cc without having to make any inquiry about the destination information to the control device 50z that is the connection destination of the destination terminal 10cc or without having to perform communication via the control device 50z.

Upon receiving the invitation information from the control device 50x, the transceiver 11 of the terminal 10cc sends participation request information, which indicates a request for participating in the session sed as invited by the terminal 10aa in response to a user request, to the control device 50z representing the connection destination of the terminal 10cc (Step S103). The participation request information contains the session ID of the target session sed for participation.

When the transceiver 51 of the control device 50z receives the participation request information, the corresponding manager 53 performs an operation identical to Step S63-1 and, based on the participation request information that is received, decides on "Accepted" as the state information indicating the new state of the terminal 10cc that issued the participation request. Then, the manager 53 issues, to the common management device 60, an updating request that is meant for updating the terminal management table and that includes the terminal ID of the terminal 10cc that issued the participation request and the state information "Accepted" indicating the new state of the terminal 10cc (Step S104-1).

When the transceiver 61 of the common management device 60 receives the updating request, the storing/reading unit 69 stores the terminal ID and the state information, which are included in the updating request, in a corresponding manner in the terminal management table (see Fig. 9(B)) managed in the common management device 60. Then, as a result of performing the operations identical to Steps S8-2-1, S8-2-..., the terminal management table managed in each of the control devices 50x, 50y, and 50z gets synchronized with the terminal management table managed in the common management device 60 (Steps S112-2-1, S112-2-...).

Then, the manager 53 manages the information related to the session sed established among the terminals 10aa, 10bb, and 10cc (Step S105-1). In this case, in response to a request from the manager 53, the transceiver 51 issues, to the common management device 60, an updating request that is meant for updating the session management table and that includes the session ID specified in the participation request information and the terminal ID of the terminal 10cc that issued the participation request.

When the transceiver 61 of the common management device 60 receives the updating request, the storing/reading unit 69 stores the session ID and the terminal ID, which are included in the updating request, in a corresponding manner in the session management table (see Fig. 9(D)) managed in the common management device 60. Then, as a result of performing the operation identical to Step S65-2-..., the session management table managed in each of the control devices 50x, 50y, and 50z gets synchronized with the session management table managed in the common management device 60 (Step S105-2-...).

Subsequently, the transceiver 51 of the control device 50z sends participation authorization information, which indicates authorization for the participation, to the terminal 10cc that issued the participation request (Step S106).

Upon receiving the participation authorization information, the transceiver 11 of the terminal 10cc, which issued the participation request, sends relay request information, which indicates a request to start the relay of contents data, to the control device 50z (Step S111). The relay request information contains the terminal ID of the terminal 10cc that issued the relay request and the session ID "conf01. 001xx" received at Step S102.

When the transceiver 51 of the control device 50z receives the relay request information, the corresponding manager 53 performs an operation identical to Step S63-1 and, based on the relay request information that is received, decides on "Busy" as the state information indicating the new state of the terminal 10cc that issued the relay request. Then, the manager 53 issues, to the common management device 60, an updating request that is meant for updating the terminal management table and that includes the terminal ID of the terminal 10cc that issued the relay request and the state information "Busy" indicating the new state of the terminal 10cc (Step S112-1).

When the transceiver 61 of the common management device 60 receives the updating request, the storing/reading unit 69 stores the terminal ID and the state information, which are included in the updating request, in a corresponding manner in the terminal management table (see Fig. 9(B)) managed in the common management device 60. Then, as a result of performing the operations identical to Steps S8-2-1, S8-2-..., the terminal management table managed in each of the control devices 50x, 50y, and 50z gets synchronized with the terminal management table managed in the common management device 60 (Steps S112-2-1, S112-2-...).

Subsequently, based on a relay device ID "001zz" associated with the terminal ID of the terminal 10cc, which issued the relay request, in the terminal management table (see Fig. 9(B)) managed in the control device 50z, the transceiver 51 of the control device 50z sends the relay request information, which is received from the terminal 10cc that issued the relay request, to the relay device 30zz identified by the relay device ID "001zz" (Step S113). This relay request information is formed by adding the terminal ID of the terminal 10cc, which issued the participation request, to the relay request information received from the terminal 10cc.

Since the session ID "conf01.001xx" that is specified in the relay request information includes the information "001xx" indicating the relay device 30 that represents the starting point, the relay device 30zz that receives the relay request information becomes able to know that the relay device 30xx is the starting relay device 30 in the session sed. Thus, the transceiver 31 of the relay device 30zz sends the relay request information, which is received from the control device 50z, to the relay device 30xx representing the starting point (Step S114).

In response to the relay request information, the transceiver 31 of the relay device 30xx sends relay authorization information, which indicates authorization for the relay, to the relay device 30zz (Step S115). Then, in response to the relay request information, the transceiver 31 of the relay device 30zz sends relay authorization information, which indicates authorization for the relay, to the control device 50z (Step S116). Upon receiving the relay authorization information sent by the relay device 30zz, the transceiver 51 of the control device 50z sends the relay authorization information to the terminal 10cc that issued the relay request (Step S117).

When the transceiver 31 of the relay device 30xx receives the relay request information, the relay device 30xx becomes able to know that the terminal 10bb, which is connected to the relay device 30zz, is participating in the session that is identified by the session ID specified in the relay request information. Thus, based on the relay devices 30 to which the terminals 10 participating in the session sed are connected, the relay device 30xx determines the transmission path for sending contents data and notifies the relay devices 30zz and 30yy about the transmission path. For example, the relay device 30xx issues, to the relay device 30zz, a request for sending the contents data received from the terminal 10cc to the relay devices 30xx and 30yy and for sending the contents data of the terminals 10aa and 10bb as received from the relay devices 30xx and 30zz, respectively, to the terminal 10cc. As a result, the relay device 30zz starts sending the contents data received from the terminal 10cc to the relay devices 30xx and 30yy, as well as starts sending the contents data of the terminal 10aa as received from the relay device 30xx to the terminal 10bb.

Moreover, the relay device 30xx issues, to the relay device 30yy, a request for sending the contents data received from the terminal 10bb to the relay device 30zz and for sending the contents data of the terminal 10cc as received from the relay device 30zz to the terminal 10bb. As a result, the relay device 30yy starts sending the contents data received from the terminal 10bb to the relay device 30zz, as well as starts sending the contents data of the terminal 10cc as received from the relay device 30zz to the terminal 10bb.

In this way, the session sed gets established between the terminal 10cc and the relay device 30zz and between the relay device 30zz and the relay devices 30xx and 30yy.

When the session sed is established between the terminal 10cc and the relay device 30zz and between the relay device 30zz and the relay devices 30xx and 30yy, mutual transmission of contents data can be performed among the terminals 10aa, 10bb, and 10cc.

### (Exiting the session sed)

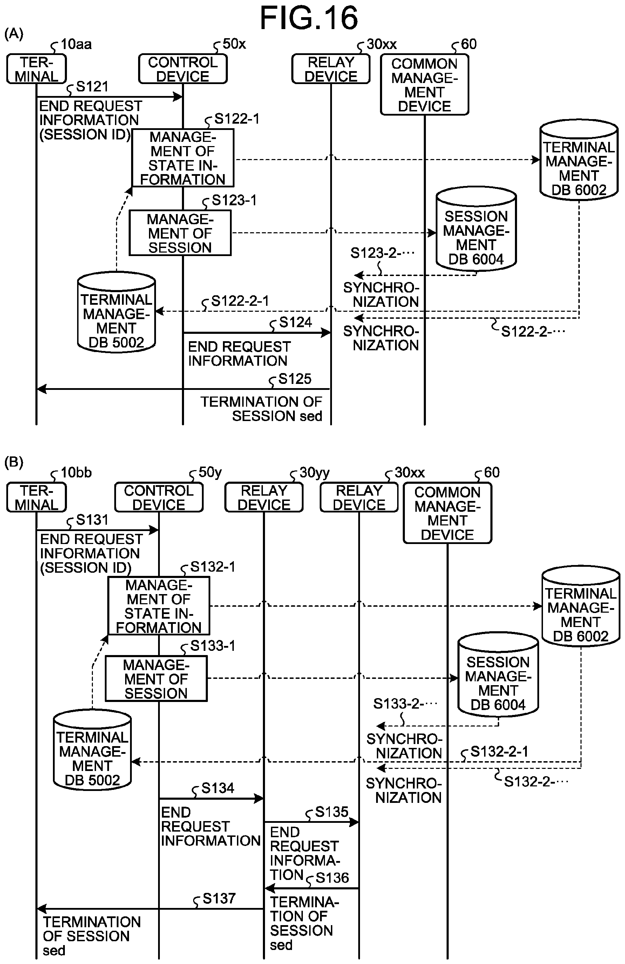

Explained below with reference to (A) in Fig. 16 are the operations by which the terminal 10aa, which is participating in the session sed established among the terminals 10aa, 10bb, and 10cc, exits the session sed. In Fig. 16, each figure is a sequence diagram for explaining the operations by which the terminal 10aa exits the session sed.

First, in response to a user request, the transceiver 11 of the terminal 10aa sends end request information, which indicates a request to end the communication, to the control device 50x (Step S121). The end request information contains the session ID "conf01.001xx" of the session sed in which the terminal 10aa is participating.

When the transceiver 51 of the control device 50x receives the end request information, the corresponding manager 53 performs an operation identical to Step S63-1 and, based on the end request information that is received, decides on "None" as the state information indicating the new state of the terminal 10aa that issued the end request. Then, the manager 53 issues, to the common management device 60, an updating request that is meant for updating the terminal management table and that includes the terminal ID of the terminal 10aa that issued the end request and the state information "None" indicating the new state of the terminal 10aa (Step S122-1).

When the transceiver 61 of the common management device 60 receives the updating request, the storing/reading unit 69 stores the terminal ID and the state information, which are included in the updating request, in a corresponding manner in the terminal management table (see Fig. 9(B)) managed in the common management device 60. Then, as a result of performing the operations identical to Steps S8-2-1, S8-2-..., the terminal management table managed in each of the control devices 50x, 50y, and 50z gets synchronized with the terminal management table managed in the common management device 60 (Steps S122-2-1, S122-2-...).

Subsequently, the manager 53 manages the information related to the session sed from which the terminal 10aa is exiting (Step S123-1). In this case, in response to a request from the manager 53, the transceiver 51 issues, to the common management device 60, an updating request that is meant for updating the session management table and that includes the session ID specified in the end request information and the terminal ID of the terminal 10aa that is exiting the session sed.

When the transceiver 61 of the common management device 60 receives the updating request, the storing/reading unit 69 deletes the terminal ID of the terminal 10aa, which is associated with the session ID specified in the updating request, from the session management table (see Fig. 9(D)) managed in the common management device 60. Then, as a result of performing the operation identical to Step S65-2-..., the terminal management table managed in each of the control devices 50x, 50y, and 50z gets synchronized with the session management table managed in the common management device 60 (Step S123-2-...).

Moreover, based on the relay device ID "001xx" that is specified in the terminal management table (see Fig. 9(B)) managed in the control device 50x and that is associated with the terminal ID of the terminal 10aa which issued the end request, the transceiver 51 of the control device 50x sends the end request information, which is received from the terminal 10aa that issued the end request, to the relay device 30xx identified by the relay device ID "001xx"

### (Step S124).

When the transceiver 31 of the relay device 30xx receives the end request information, the relay device 30xx becomes able to know that the terminal 10aa is exiting the session sed established among the terminals 10aa, 10bb, and 10cc. Thus, based on the relay devices 30 to which the terminals 10bb and 10cc, which are participating in the session sed even after the exit of the terminal 10aa, are connected, the relay device 30xx determines the transmission path for sending contents data and notifies the relay devices 30yy and 30zz about the transmission path. For example, the relay device 30xx issues, to the relay device 30yy, a request for sending the contents data received from the terminal 10bb to the relay device 30zz and for sending the contents data of the terminal 10cc as received from the relay device 30zz to the terminal 10bb. Moreover, the relay device 30xx issues, to the relay device 30zz, a request for sending the contents data received from the terminal 10cc to the relay device 30yy and for sending the contents data of the terminal 10bb as received from the relay device 30yy to the terminal 10cc.

As a result, although the terminal 10aa terminates the session sed (Step S125), mutual transmission of contents data can be performed on a continuing basis between the terminals 10bb and 10cc.

Explained below with reference to (B) in Fig. 16 are the operations by which the terminal 10bb exits the session sed that remains established between the terminals 10bb and 10cc after the exit of the terminal 10aa. First, in response to a user request, the transceiver 11 of the terminal 10bb sends end request information, which indicates a request to end the communication, to the control device 50y (Step S131). The end request information contains the session ID "conf01.001xx" of the session sed in which the terminal 10bb is participating.

When the transceiver 51 of the control device 50y receives the end request information, the corresponding manager 53 performs an operation identical to Step S63-1 and, based on the end request information that is received, decides on "None" as the state information indicating the new state of the terminal 10bb that issued the end request. Then, the manager 53 issues, to the common management device 60, an updating request that is meant for updating the terminal management table and that includes the terminal ID of the terminal 10bb that issued the end request and the state information "None" indicating the new state of the terminal 10aa (Step S132-1).

When the transceiver 61 of the common management device 60 receives the updating request, the storing/reading unit 69 stores the terminal ID and the state information, which are included in the updating request, in a corresponding manner in the terminal management table (see Fig. 9(B)) managed in the common management device 60. Then, as a result of performing the operations identical to Steps S8-2-1, S8-2-..., the terminal management table managed in each of the control devices 50x, 50y, and 50z gets synchronized with the terminal management table managed in the common management device 60 (Steps S132-2-1, S132-2-...).

Subsequently, the manager 53 manages the information related to the session sed from which the terminal 10bb is exiting (Step S133-1). In this case, in response to a request from the manager 53, the transceiver 51 issues, to the common management device 60, an updating request that is meant for updating the session management table and that includes the terminal ID of the terminal 10bb that is exiting the session sed.

When the transceiver 61 of the common management device 60 receives the updating request, the storing/reading unit 69 deletes the terminal ID of the terminal 10bb, which is associated with the session ID specified in the updating request, from the session management table (see Fig. 9(D)) managed in the common management device 60. Then, as a result of performing the operation identical to Step S65-2-..., the terminal management table managed in each of the control devices 50x, 50y, and 50z gets synchronized with the session management table managed in the common management device 60 (Step S133-2-...).

Moreover, based on the relay device ID "001yy" that is specified in the terminal management table (see Fig. 9(B)) managed in the control device 50y and that is associated with the terminal ID of the terminal 10bb which issued the end request, the transceiver 51 of the control device 50y sends the end request information, which is received from the terminal 10bb that issued the end request, to the relay device 30yy identified by the relay device ID "001yy" (Step S134). Since the session ID "conf01.001xx" that is specified in the end request information includes the information "001xx" indicating the relay device 30xx that represents the starting point, the relay device 30yy that receives the end request information becomes able to know that the relay device 30xx is the starting relay device 30 in the session sed. Thus, the transceiver 31 of the relay device 30yy sends the end request information, which is received from the control device 50y, to the relay device 30xx representing the starting point (Step S135).

When the transceiver 31 of the relay device 30xx receives the end request information, the relay device 30xx becomes able to know that the terminal 10bb is exiting the session sed established between the terminals 10bb and 10cc. Thus, based on the relay device 30 to which the terminal 10cc that is participating in the session sed even after the exit of the terminal 10aa is connected, the relay device 30xx determines the transmission path for sending contents data and notifies the relay devices 30yy and 30zz about the transmission path. For example, the relay device 30xx issues, to the relay device 30yy, a request for terminating the session sed with the terminal 10bb and the session sed with the relay device 30xx (Step S136). Moreover, the relay device 30xx issues, to the relay device 30zz, a request for returning the contents data of the terminal 10cc as received from the terminal 10cc to the terminal 10cc. As a result, although the terminal 10bb terminates the session sed (Step S137), the terminal 10bb can continue with the session sed in which the contents data sent by it is received by itself via the relay device 30zz.

### (Logout operation)

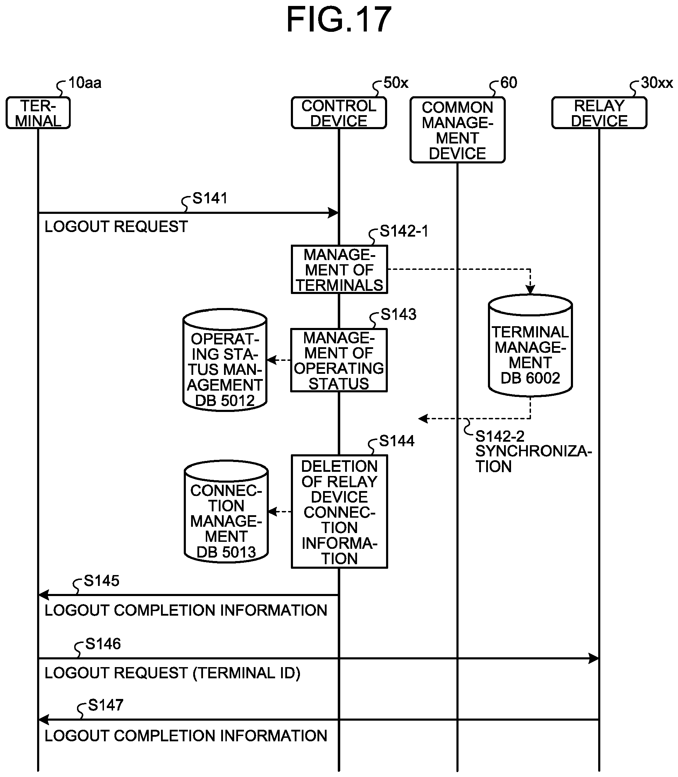

First, explained below with reference to Fig. 17 are the operations by which a particular terminal 10 logs out of the control device 50. Fig. 17 is a diagram for explaining the logout operation performed by a particular terminal 10. The following explanation is given for the operations by which the terminal 10aa logs out of the control device 50x after exiting the session sed with the terminals 10bb and 10cc.

In response to a user request, the terminal 10aa issues a logout request to the control device 50x, which represents the corresponding connection destination, using the transceiver 11 (Step S141). The transceiver 51 of the control device 50x receives the logout request and, in response to a request from the manager 53, issues, to the common management device 60, a request for deleting the area ID, the IP address, and the relay device ID that are associated with the terminal ID of the terminal 10aa, which is going to log out, from the terminal management table (see Fig. 9(B)) (Step S142-1).

When the transceiver 61 of the common management device 60 receives the request, the storing/reading unit 69 deletes the area ID, the IP address, and the relay device ID that are associated with the received terminal ID from the terminal management table (see Fig. 9(B)) managed in the common management device 60. Then, as a result of performing the operations identical to Steps S8-2-1, S8-2-..., the terminal management table managed in each of the control devices 50x, 50y, and 50z gets synchronized with the terminal management table managed in the common management device 60 (Steps S142-2-...).

Subsequently, in response to a request from the manager 53, the storing/reading unit 59 stores the operating status "offline" in a corresponding manner to the terminal ID of the terminal 10aa, which issued the logout request, in the operating status management table (see Fig. 9(F)) (Step S143). The updated operating status "Offline" is then notified to the destination candidate terminals 10 of the terminal 10aa as a result of the operations performed from Step S48 to Steps S52-1 and S52-2.

Moreover, the manager 53 deletes, from the connection management table (see Fig. 9(G)) managed in the control device 50x, the record of the terminal ID of the terminal 10aa that issued the logout request (Step S144). As a result, the terminal ID of the terminal 10aa as well as the relay device connection ID and the relay device connection password associated with that terminal ID are deleted from the connection management table.

Subsequently, the transceiver 51 of the control device 50x sends logout completion information, which indicates completion of the logout, to the terminal 10aa that issued the logout request (Step S145).

The terminal 10aa sends a logout request to the relay device 30xx (Step S146). In the relay device 30xx, when the operations associated with the logout of the terminal 10aa are completed, logout completion information is sent to the terminal 10aa (Step S147).

As a result of the operations described above, the terminal 10aa completely logs out of the control device 50x and the relay device 30xx.

### «Main effects according to embodiment»

Given below is the explanation of main effects achieved according to the embodiment.

The management system 5 (an example of a control system) includes a plurality of control devices 50 that control a session sed established for sending contents data among the terminals 10. The transceiver 51 (an example of a destination information sending unit) of each of the plurality of control devices 50 (the control devices 50x, 50y, and 50z) sends the IP address (an example of destination information) indicating the address of the terminal 10 (an example of a first communication terminal), to which the concerned control device 50 is connected, in the communication network 2 to the common management device 60 (an example of a management device) that manages IP addresses. Moreover, the transceiver 51 (an example of a destination information receiver) of each of the control devices 50x, 50y, and 50z receives the IP address that indicates the address of the terminal 10 (an example of a second communication terminal) connected to another control device 50 and that is sent by the common management device 60.

The transceiver 51 (an example of an inter-terminal information receiver) of each of the control devices 50x, 50y, and 50z receives, from among the information sent among the terminal 10 connected to the concerned control device 50 and the terminals connected to the other control devices for the purpose of establishing the session sed among the terminals 10, information such as a start request for starting communication (an example of inter-terminal information) issued by the terminal connected to the concerned control device 50. Moreover, the transceiver 51 (an example of an inter-terminal information sending unit) of each of the control devices 50x, 50y, and 50z sends, based on the previously-received IP addresses of the terminals 10 connected to the other control devices 50, the received start request to the terminals 10 connected to the other control devices 50.

As a result, each of the control devices 50x, 50y, and 50z becomes able to send, in the case of establishing the session sed between the terminal 10 connected to the concerned control device 50 and the terminals 10 connected to the other control devices, a start request directly to the terminals 10 connected to the other control devices 50 without having to perform communication via the other control devices 50. As a result, as compared to the case in which the start request is sent via the other control devices 50, the transmission path of the start request can be shortened, and thus the time required for establishing the session sed can be shortened.

The terminal management DB 5002 (an example of a destination information manager) of each of the control devices 50x, 50y, and 50z manages the IP addresses of the terminals 10 connected to the other control devices 50 as received by the corresponding transceiver 51. Based on the IP addresses of the terminals 10, which are connected to the other control devices 50, managed in the terminal management DB 5002, the transceiver 51 sends the start request to the terminals 10 connected to the other control devices 50. In this way, as a result of using the IP addresses that are stored in advance in the terminal management DB 5002 of the concerned control device 50, the corresponding transceiver 51 can promptly send the start request to the terminals 10 connected to the other control devices 50.

The transceiver 51 (an example of a deletion request issuing unit) of each of the control devices 50x, 50y, and 50z issues, when the terminal 10 logs out of the concerned control device 50 and terminates the connection, a request to the common management device 60 for deleting the IP address of the terminal 10 that terminates the connection from among the IP addresses managed in the terminal management DB 6002 by the common management device 60. In this way, every time a particular terminal 10 terminates the connection, the IP address of that connection-terminating terminal 10 is deleted from among the IP addresses managed in the terminal management DB 6002. Thus, when the same terminal 10 is newly connected to an arbitrary control device 50, the IP address of that terminal 10 is prevented from being doubly registered.

The transceiver 51 (an example of a state information receiver) of each of the control devices 50x, 50y, and 50z receives the state information indicating the state of each terminal 10 as sent by the common management device 60 that manages the states of the terminals 10. Moreover, the manager 53 (an example of a determining unit) of each of the control devices 50x, 50y, and 50z decides, based on the start request received by the transceiver 51 and the state information "None", "Calling" as the state information indicating the new state of the terminal 10 that is connected to the concerned control device 50. Moreover, the transceiver 51 of each of the control devices 50x, 50y, and 50z sends, to the common management device 60, the state information "Calling" that indicates the new state of the terminal 10 connected to the concerned control device 50 and that is determined by the manager 53.

As a result, the new state of the terminal 10 that is connected to the concerned control device 50 can be notified to the other control devices via the common management device 60.

The terminal management DB 5002 (an example of a state information management device) of each control device 50 manages the state information indicating the states of the terminals 10 as received by the transceiver 51. The storing/reading unit 59 (an example of an updating unit) updates, based on the sets of state information received by the transceiver 51, the state information managed in the terminal management DB 5002. Based on the state information managed in the terminal management DB 5002, the manager 53 determines the state information indicating the new state of the terminal 10 connected to the concerned control device 50. In this way, as a result of using the state information that is stored in advance in the terminal management DB 5002, the manager 53 can promptly determine the state information indicating the new state of the terminal 10 connected to the concerned control device 50.

The management system 5 includes the control device 50x (an example of a first control device) connected to the terminal 10aa (an example of a first communication terminal) and includes the control device 50y (an example of a second control device) connected to the terminal 10bb (an example of a second communication terminal). The transceiver 51 of the control device 50x receives a start request that is issued by the terminal 10aa for starting communication between the terminals 10aa and 10bb, and sends the start request to the terminal 10bb.

The transceiver 51 of the control device 50y receives start authorization (an example of inter-terminal information) that is sent by the terminal 10bb in response to the start request for starting communication between the terminals 10aa and 10bb, and sends the start authorization to the terminal 10aa.

As a result, also in the case in which the information used in establishing a session sed is mutually sent between the terminals 10aa and 10bb, since the same information can be sent using one of the control devices 50, it becomes possible to reduce the time required for establishing the session sed.

### «Supplementary explanation of embodiment»

In the embodiment described above, the explanation is given for the case in which the common management device 60 is a different device than the control devices 50. However, the present invention is not limited to such an embodiment. According to another embodiment, the common management device 60 can be configured in one control device 50 from among the control devices 50x, 50y, and 50z. In that case, the concerned control device 50 includes the functional units of the common management device 60. For example, if the control device 50 having the highest number of connections with the terminals 10 is configured to include the functional units of the common management device 60, then the average time required by the control devices 50 to access the common management device 60 can be reduced as far as the entire communication system 1 is concerned.

### Reference Signs List

- 1: Communication system
- 2: Communication network
- 5: Management system
- 10: Terminal
- 11: Transceiver
- 12: Receiver
- 13: Communication controller
- 17: Display controller
- 19: Storing/reading unit
- 30: Relay device
- 31: Transceiver
- 32: Authenticating unit
- 39: Storing/reading unit
- 50: Control device
- 51: Transceiver
- 52: Authenticating unit
- 53: Manager
- 54: Searching unit
- 58: Session controller
- 59: Storing/reading unit
- 60: Common management device
- 61: Transceiver
- 69: Storing/reading unit
- 1000: Storage unit
- 3000: Storage unit
- 5000: Storage unit
- 5001: Authentication management DB
- 5002: Terminal management DB
- 5003: Destination list management DB
- 5004: Session management DB
- 5011: Relay device management DB
- 5012: Operating status management DB
- 5013: Connection management DB
- 6000: Storage unit
- 6001: Authentication management DB
- 6002: Terminal management DB
- 6003: Destination list management DB
- 6004: Session management DB

### Citation List

### Patent Literature

Patent Literature 1: Japanese Patent Literature Laid-open No. 2013-243469

## Claims

1. A control system (5) comprising:
a first control device (50x) connected to a first communication terminal (10aa) to control a session for sending and receiving contents data; and
a second control device (50y) connected to a second communication terminal (10bb) to control a session for sending and receiving contents data, wherein
the first control device (50x) includes
a first destination information sending unit (51) configured to send destination information indicating address of the first communication terminal (10aa) in a communication network to a management device (60) that manages the destination information, the first destination information sending unit (51) is configured to send the destination information to the second communication terminal (10bb) in response to a request from the first communication terminal (10aa); and
a first destination information receiving unit (51) configured to receive destination information indicating address of the second communication terminal (10bb) from the management device (60),
**characterized in that**
the first control device (50x) includes
a first inter-terminal information receiving unit (51) configured to receive, from among inter-terminal information sent between the first communication terminal (10aa) and the second communication terminal (10bb), the inter-terminal information sent by the first communication terminal (10aa), the inter-terminal information to be received including a start request for starting communication between the first communication terminal (10aa) and the second communication terminal (10bb); and
a first inter-terminal information sending unit (51) configured to send, based on the destination information of the second communication terminal (10bb), the inter-terminal information indicating the start request to the second communication terminal (10bb), and **in that**
the second control device (50y) includes
a second destination information sending unit (51) configured to send the destination information of the second communication terminal (10bb) to the management device (60);
a second destination information receiving unit (51) configured to receive the destination information of the first communication terminal (10aa) from the management device (60);
a second inter-terminal information receiving unit (51) configured to receive, from among inter-terminal information sent between the first communication terminal (10aa) and the second communication terminal (10bb), the inter-terminal information sent by the second communication terminal (10bb), the inter-terminal information to be received including authorization for starting communication between the first communication terminal (10aa) and the second communication terminal (10bb); and
a second inter-terminal information sending unit (51) configured to send the inter-terminal information indicating the authorization for starting communication to the first communication terminal (10aa), based on the destination information of the first communication terminal (10aa).

2. The control system (5) according to claim 1, wherein
the first control device (50x) includes a first destination information managing unit (5002) configured to manage the destination information of the second communication terminal (10bb) received by the first destination information receiving unit (51), and
the first inter-terminal information sending unit (51) sends the inter-terminal information to the second communication terminal (10bb), based on the destination information of the second communication terminal (10bb) managed in the first destination information managing unit (5002).

3. The control system (5) according to claim 2, wherein
the first control device (50x) includes a first deletion request issuing unit (51) configured to issue, when the first communication terminal (10aa) terminates connection with the first control device (50x), to the management device (60), a request for deleting the destination information of the first communication terminal (10aa) that terminates connection, from among the destination information managed in the management device (60), and
the second control device (50) includes a second deletion request issuing unit (51) configured to issue, when the second communication terminal (10bb) terminates connection with the second control device (50), to the management device (60), a request for deleting the destination information of the second communication terminal (10bb) that terminates connection, from among the destination information managed in the management device (60).

4. The control system (5) according to any one of claims 1 to 3, wherein
each of the first and second control devices (50x, 50y) includes a state information receiving unit (51) configured to receive sets of state information each of which indicates state of one of the communication terminals (10aa, 10bb) sent by the management device (60) that manages state of the communication terminals (10aa, lObb),
the first control device (50x) includes
a first determining unit (53) configured to determine, based on the inter-terminal information received by the first inter-terminal information receiving unit (51) and based on the state information received by the state information receiving unit (51) of the first control device (50x), state information indicating new state of the first communication terminal (10aa), and
a first state information sending unit configured to send, to the management device (60), the state information indicating new state of the first communication terminal (10aa) determined by the first determining unit (53).

5. The control system (5) according to claim 4, wherein
each of the first and second control devices (50x, 50y) includes
a state information managing unit (5002) configured to manage state information indicating state of the communication terminals (10aa, 10bb), and
an updating unit (59) configured to update state information that is managed in the state information managing unit (5002), based on each of the sets of state information received by the state information receiving unit (51), wherein
the first determining unit (53) determines the state information indicating new state of the first communication terminal (10aa), based on the state information managed in the state information managing unit (5002) of the first control device (50x).

6. The control system (5) according to any one of claims 1 to 5, comprising:
the first control device (50x);
the second control device (50y); and
the management device (60).

7. A control method for a control system (5) including a first control device (50x) connected to a first communication terminal (10aa) to control a session for sending and receiving contents data and a second control device (50y) connected to a second communication terminal (10bb) to control a session for sending and receiving contents data, the method comprising:
sending, by the first control device (50x), destination information indicating address of the first communication terminal (10aa) in a communication network to a management device (60) that manages the destination information, wherein the destination information is sent to the second communication terminal (10bb) in response to a request from the first communication terminal (10aa); and
receiving, by the first control device (50x), destination information indicating address of the second communication terminal (10bb) from the management device (5002),
**characterized by**
receiving, by the first control device (50x), from among inter-terminal information sent between the first communication terminal (10aa) and the second communication terminal (10bb) for establishing the session between the first communication terminal (10aa) and the second communication terminal (10bb), the inter-terminal information sent by the first communication terminal (10aa), the inter-terminal information to be received including a start request for starting communication between the first communication terminal (10aa) and the second communication terminal (10bb);
sending, by the first control device (50x), based on the destination information of the second communication terminal (10bb), the inter-terminal information indicating the start request to the second communication terminal (10bb);
sending, by the second control device (50y), the destination information of the second communication terminal (10bb) to the management device (60);
receiving, by the second control device (50y), the destination information of the first communication terminal (lOaa) from the management device (60);
receiving, by the second control device (50y), from among inter-terminal information sent between the first communication terminal (10aa) and the second communication terminal (10bb), the inter-terminal information sent by the second communication terminal, the inter-terminal information to be received including authorization for starting communication between the first communication terminal (10aa) and the second communication terminal (10bb); and
sending, by the second control device (50y), the inter-terminal information indicating the authorization for starting communication to the first communication terminal (10aa), based on the destination information of the first communication terminal (10aa).

8. The control method according to claim 7, further comprising:
sending, by the first communication terminal (10aa), the inter-terminal information that indicates the start request for starting communication to the first control device (50x); and
receiving, by the first communication terminal (10aa), the inter-terminal information that indicates the authorization for starting communication.

9. The control method according to claim 8, further comprising:
receiving, by the second communication terminal (10bb), the inter-terminal information that is sent by the first control device (50x) and that indicates the start request for starting communication; and
sending, by the second communication terminal (10bb), the inter-terminal information that indicates the authorization for starting communication to the second control device (50y).

10. A computer program product comprising instructions which, when executed by the first and second control devices cause the control devices to perform the corresponding steps according to claim 7.

## Patentansprüche

1. Steuersystem (5), umfassend:
eine erste Steuervorrichtung (50x), die mit einem ersten Kommunikationsendgerät (10aa) verbunden ist, um eine Sitzung zum Senden und Empfangen von Inhaltsdaten zu steuern; und
eine zweite Steuervorrichtung (50y), die mit einem zweiten Kommunikationsendgerät (10bb) verbunden ist, um eine Sitzung zum Senden und Empfangen von Inhaltsdaten zu steuern, wobei
die erste Steuervorrichtung (50x) Folgendes beinhaltet
eine erste Zielinformationensendeeinheit (51), die konfiguriert ist, um Zielinformationen, die die Adresse des ersten Kommunikationsendgeräts (10aa) in einem Kommunikationsnetzwerk angeben, an eine Verwaltungsvorrichtung (60) zu senden, die die Zielinformationen verwaltet, wobei die erste Zielinformationensendeeinheit (51) konfiguriert ist, um die Zielinformationen an das zweite Kommunikationsendgerät (10bb) als Antwort auf eine Anfrage von dem ersten Kommunikationsendgerät (10aa) zu senden; und
eine erste Zielinformationenempfangseinheit (51), die konfiguriert ist, um Zielinformationen, die die Adresse des zweiten Kommunikationsendgeräts (10bb) angeben, von der Verwaltungsvorrichtung (60) zu empfangen,
**gekennzeichnet dadurch, dass**
die erste Steuervorrichtung (50x) Folgendes beinhaltet
eine erste Zwischenendgerätsinformationen-Empfangseinheit (51), die konfiguriert ist, um, aus Zwischenendgerätsinformationen, die zwischen dem ersten Kommunikationsendgerät (10aa) und dem zweiten Kommunikationsendgerät (10bb) gesendet werden, die Zwischenendgerätsinformationen zu empfangen, die von dem ersten Kommunikationsendgerät (10aa) gesendet werden, wobei die zu empfangenen Zwischenendgerätsinformationen eine Startanfrage zum Starten von Kommunikation zwischen dem ersten Kommunikationsendgerät (10aa) und dem zweiten Kommunikationsendgerät (10bb) beinhalten; und
eine erste Zwischenendgerätsinformationen-Sendeeinheit (51), die konfiguriert ist, um, basierend auf den Zielinformationen des zweiten Kommunikationsendgeräts (10bb), die Zwischenendgerätsinformationen, die die Startanfrage angeben, an das zweite Kommunikationsendgerät (10bb) zu senden, und dadurch, dass die zweite Steuervorrichtung (50y) Folgendes beinhaltet
eine zweite Zielinformationensendeeinheit (51), die konfiguriert ist, um die Zielinformationen des zweiten Kommunikationsendgeräts (10bb) an die Verwaltungsvorrichtung (60) zu senden;
eine zweite Zielinformationenempfangseinheit (51), die konfiguriert ist, um Zielinformationen des ersten Kommunikationsendgeräts (10aa) von der Verwaltungsvorrichtung (60) zu empfangen;
eine zweite Zwischenendgerätsinformationen-Empfangseinheit (51), die konfiguriert ist, um, aus Zwischenendgerätsinformationen, die zwischen dem ersten Kommunikationsendgerät (10aa) und dem zweiten Kommunikationsendgerät (10bb) gesendet werden, die Zwischenendgerätsinformationen zu empfangen, die von dem zweiten Kommunikationsendgerät (10bb) gesendet werden, wobei die zu empfangenen Zwischenendgerätsinformationen eine Autorisierung zum Starten von Kommunikation zwischen dem ersten Kommunikationsendgerät (10aa) und dem zweiten Kommunikationsendgerät (10bb) beinhalten; und
eine zweite Zwischenendgerätsinformationen-Sendeeinheit (51), die konfiguriert ist, um die Zwischenendgerätsinformationen, die die Autorisierung zum Starten einer Kommunikation angeben, an das erste Kommunikationsendgerät (10aa) zu senden, basierend auf den Zielinformationen des ersten Kommunikationsendgeräts (10aa).

2. Steuersystem (5) nach Anspruch 1, wobei
die erste Steuervorrichtung (50x) eine erste Zielinformationenverwaltungseinheit (5002) beinhaltet, die konfiguriert ist, um die Zielinformationen des zweiten Kommunikationsendgeräts (10bb), die von der ersten Zielinformationenempfangseinheit (51) empfangen werden, zu verwalten, und
die erste Zwischenendgerätsinformationen-Sendeeinheit (51) die Zwischenendgerätsinformationen an das zweite Kommunikationsendgerät (10bb) sendet, basierend auf den Zielinformationen des zweiten Kommunikationsendgeräts (10bb), die in der ersten Zielinformationenverwaltungseinheit (5002) verwaltet werden.

3. Steuersystem (5) nach Anspruch 2, wobei
die erste Steuervorrichtung (50x) eine erste Löschanfragenausstellungseinheit (51) beinhaltet, die konfiguriert ist, um, wenn das erste Kommunikationsendgerät (10aa) eine Verbindung mit der ersten Steuervorrichtung (50x) beendet, an die Verwaltungsvorrichtung (60) eine Anfrage zum Löschen der Zielinformationen des ersten Kommunikationsendgeräts (10aa) auszustellen, die die Verbindung beendet, aus den Zielinformationen, die in der Verwaltungsvorrichtung (60) verwaltet werden, und
die zweite Steuervorrichtung (50) eine zweite Löschanfragenausstellungseinheit (51) beinhaltet, die konfiguriert ist, um, wenn das zweite Kommunikationsendgerät (10bb) eine Verbindung mit der zweiten Steuervorrichtung (50) beendet, an die Verwaltungsvorrichtung (60) eine Anfrage zum Löschen der Zielinformationen des zweiten Kommunikationsendgeräts (10bb) auszustellen, die die Verbindung beendet, aus den Zielinformationen, die in der Verwaltungsvorrichtung (60) verwaltet werden.

4. Steuersystem (5) nach einem der Ansprüche 1 bis 3, wobei
jede der ersten und zweiten Steuervorrichtung (50x, 50y) eine Zustandsinformationenempfangseinheit (51) beinhaltet, die konfiguriert ist, um Sätze von Zustandsinformationen zu empfangen, von denen jeder einen Zustand von einem der Kommunikationsendgeräte (10aa, 10bb) angibt, die von der Verwaltungsvorrichtung (60) gesendet werden, die den Zustand der Kommunikationsendgeräte (10aa, 10bb) verwaltet,
die erste Steuervorrichtung (50x) Folgendes beinhaltet
eine erste Bestimmungseinheit (53), die konfiguriert ist, um, basierend auf den Zwischenendgerätsinformationen, die von der ersten Zwischenendgerätsinformationen-Empfangseinheit (51) empfangen werden, und basierend auf den Zustandsinformationen, die von der Zustandsinformationenempfangseinheit (51) der ersten Steuervorrichtung (50x) empfangen werden, Zustandsinformationen zu bestimmen, die einen neuen Zustand des ersten Kommunikationsendgeräts (10aa) angeben, und
eine erste Zustandsinformationensendeeinheit, die konfiguriert ist, um, an die Verwaltungsvorrichtung (60), die Zustandsinformationen zu senden, die einen neuen Zustand des ersten Kommunikationsendgeräts (10aa) angeben, der durch die erste Bestimmungseinheit (53) bestimmt wird.

5. Steuersystem (5) nach Anspruch 4, wobei
jede der ersten und zweiten Steuervorrichtung (50x, 50y) Folgendes beinhaltet
eine Zustandsinformationenverwaltungseinheit (5002), die konfiguriert ist, um Zustandsinformationen zu verwalten, die einen Zustand der Kommunikationsendgeräte (10aa, 10bb) angeben, und
eine Aktualisierungseinheit (59), die konfiguriert ist, um Zustandsinformationen zu aktualisieren, die in der Zustandsinformationenverwaltungseinheit (5002) verwaltet werden, basierend auf jedem der Sätze von Zustandsinformationen, die von der Zustandsinformationenempfangseinheit (51) empfangen werden, wobei
die erste Bestimmungseinheit (53) die Zustandsinformationen bestimmt, die einen neuen Zustand des ersten Kommunikationsendgeräts (10aa) basierend auf den Zustandsinformationen angeben, die in der Zustandsinformationenverwaltungseinheit (5002) der ersten Steuervorrichtung (50x) verwaltet werden.

6. Steuersystem (5) nach einem der Ansprüche 1 bis 5, umfassend:
die erste Steuervorrichtung (50x);
die zweite Steuervorrichtung (50y); und
die Verwaltungsvorrichtung (60).

7. Steuerverfahren für ein Steuersystem (5) einschließlich einer ersten Steuervorrichtung (50x), die mit einem ersten Kommunikationsendgerät (10aa) verbunden ist, um eine Sitzung zum Senden und Empfangen von Inhaltsdaten zu steuern, und einer zweiten Steuervorrichtung (50y), die mit einem zweiten Kommunikationsendgerät (10bb) verbunden ist, um eine Sitzung zum Senden und Empfangen von Inhaltsdaten zu steuern, wobei das Verfahren Folgendes umfasst:
Senden, durch die erste Steuervorrichtung (50x), von Zielinformationen, die die Adresse des ersten Kommunikationsendgeräts (10aa) in einem Kommunikationsnetzwerk angeben, an eine Verwaltungsvorrichtung (60), die die Zielinformationen verwaltet, wobei die Zielinformationen an das zweite Kommunikationsendgerät (10bb) als Antwort auf eine Anfrage von dem ersten Kommunikationsendgerät (10aa) gesendet werden; und
Empfangen, durch die erste Steuervorrichtung (50x), von Zielinformationen, die die Adresse des zweiten Kommunikationsendgeräts (10bb) angeben, von der Verwaltungsvorrichtung (5002),
**gekennzeichnet durch**
Empfangen, durch die erste Steuervorrichtung (50x) aus Zwischenendgerätsinformationen, die zwischen dem ersten Kommunikationsendgerät (10aa) und dem zweiten Kommunikationsendgerät (10bb) gesendet werden, zum Errichten der Sitzung zwischen dem ersten Kommunikationsendgerät (10aa) und dem zweiten Kommunikationsendgerät (10bb) gesendet werden, der Zwischenendgerätsinformationen, die von dem ersten Kommunikationsendgerät (10aa) gesendet werden, wobei die zu empfangenen Zwischenendgerätsinformationen eine Startanfrage zum Starten von Kommunikation zwischen dem ersten Kommunikationsendgerät (10aa) und dem zweiten Kommunikationsendgerät (10bb) beinhalten;
Senden, durch die erste Steuervorrichtung (50x), basierend auf den Zielinformationen des zweiten Kommunikationsendgeräts (10bb), der Zwischenendgerätsinformationen, die die Startanfrage angeben, an das zweite Kommunikationsendgerät (10bb);
Senden, durch die zweite Steuervorrichtung (50y), der Zielinformationen des zweiten Kommunikationsendgeräts (10bb) an die Verwaltungsvorrichtung (60);
Empfangen, durch die zweite Steuervorrichtung (50y), der Zielinformationen des ersten Kommunikationsendgeräts (10aa), von der Verwaltungsvorrichtung (60);
Empfangen, durch die zweite Steuervorrichtung (50y), aus Zwischenendgerätsinformationen, die zwischen dem ersten Kommunikationsendgerät (10aa) und dem zweiten Kommunikationsendgerät (10bb) gesendet werden, der Zwischenendgerätsinformationen, die von dem zweiten Kommunikationsendgerät gesendet werden, wobei die zu empfangenen Zwischenendgerätsinformationen eine Autorisierung zum Starten von Kommunikation zwischen dem ersten Kommunikationsendgerät (10aa) und dem zweiten Kommunikationsendgerät (10bb) beinhalten; und
Senden, durch die zweite Steuervorrichtung (50y), der Zwischenendgerätsinformationen, die die Autorisierung zum Starten einer Kommunikation angeben, an das erste Kommunikationsendgerät (10aa), basierend auf den Zielinformationen des ersten Kommunikationsendgeräts (10aa).

8. Steuerverfahren nach Anspruch 7, ferner umfassend:
Senden, durch das erste Kommunikationsendgerät (10aa), der Zwischenendgerätsinformationen, die die Startanfrage zum Starten von Kommunikation angeben, an die erste Steuervorrichtung (50x); und
Empfangen, durch das erste Kommunikationsendgerät (10aa), der Zwischenendgerätsinformationen, die die Autorisierung zum Starten von Kommunikation angeben.

9. Steuerverfahren nach Anspruch 8, ferner umfassend:
Empfangen, durch das zweite Kommunikationsendgerät (10bb), der Zwischenendgerätsinformationen, die von der ersten Steuervorrichtung (50x) gesendet werden und die die Startanfrage zum Starten von Kommunikation angeben; und
Senden, durch das zweite Kommunikationsendgerät (10bb), der Zwischenendgerätsinformationen, die die Autorisierung zum Starten von Kommunikation angeben, an die zweite Steuervorrichtung (50y).

10. Computerprogrammprodukt, umfassend Anweisungen, die, wenn sie von der ersten und zweiten Steuervorrichtung ausgeführt werden, verursachen, dass die Steuervorrichtungen die entsprechenden Schritte nach Anspruch 7 durchführen.

## Revendications

1. Système de commande (5), comprenant :
un premier dispositif de commande (50x) connecté à un premier terminal de communication (10aa) pour commander une session pour envoyer et recevoir des données de contenus ; et
un second dispositif de commande (50y) connecté à un second terminal de communication (10bb) pour commander une session pour envoyer et recevoir des données de contenus, dans lequel
le premier dispositif de commande (50x) inclut
une première unité d'envoi d'informations de destination (51) configurée pour envoyer des informations de destination indiquant l'adresse du premier terminal de communication (10aa) dans un réseau de communication à un dispositif de gestion (60) qui gère les informations de destination, la première unité d'envoi d'informations de destination (51) est configurée pour envoyer les informations de destination au second terminal de communication (10bb) en réponse à une demande provenant du premier terminal de communication (10aa) ; et
une première unité de réception d'informations de destination (51) configurée pour recevoir des informations de destination indiquant l'adresse du second terminal de communication (10bb) à partir du dispositif de gestion (60),
**caractérisé en ce que** :
le premier dispositif de commande (50x) inclut
une première unité de réception d'informations inter-terminal (51) configurée pour recevoir, parmi des informations inter-terminal envoyées entre le premier terminal de communication (10aa) et le second terminal de communication (10bb), les informations inter-terminal envoyées par le premier terminal de communication (10aa), les informations inter-terminal destinées à être reçues incluant une demande de commencement pour commencer la communication entre le premier terminal de communication (10aa) et le second terminal de communication (lObb) ; et
une première unité d'envoi d'informations inter-terminal (51) configurée pour envoyer, sur la base des informations de destination du second terminal de communication (10bb), les informations inter-terminal indiquant la demande de commencement au second terminal de communication (10bb), et dans lequel
le second dispositif de commande (50y) inclut
une seconde unité d'envoi d'informations de destination (51) configurée pour envoyer les informations de destination du second terminal de communication (10bb) au dispositif de gestion (60) ;
une seconde unité de réception d'informations de destination (51) configurée pour recevoir les informations de destination du premier terminal de communication (10aa) à partir du dispositif de gestion (60) ;
une seconde unité de réception d'informations inter-terminal (51) configurée pour recevoir, parmi des informations inter-terminal envoyées entre le premier terminal de communication (10aa) et le second terminal de communication (10bb), les informations inter-terminal envoyées par le second terminal de communication (10bb), les informations inter-terminal destinées à être reçues incluant l'autorisation pour commencer la communication entre le premier terminal de communication (10aa) et le second terminal de communication (10bb) ; et
une seconde unité d'envoi d'informations inter-terminal (51) configurée pour envoyer les informations inter-terminal, indiquant l'autorisation pour commencer la communication, au premier terminal de communication (10aa), sur la base des informations de destination du premier terminal de communication (10aa).

2. Système de commande (5) selon la revendication 1, dans lequel
le premier dispositif de commande (50x) inclut une première unité de gestion d'informations de destination (5002) configurée pour gérer les informations de destination du second terminal de communication (10bb) reçues par la première unité de réception d'informations de destination (51), et
la première unité d'envoi d'informations inter-terminal (51) envoie les informations inter-terminal au second terminal de communication (10bb), sur la base des informations de destination du second terminal de communication (10bb) gérées dans la première unité de gestion d'informations de destination (5002).

3. Système de commande (5) selon la revendication 2, dans lequel
le premier dispositif de commande (50x) inclut une première unité d'émission de demande de suppression (51) configurée pour émettre, lorsque le premier terminal de communication (10aa) termine la connexion au premier dispositif de commande (50x), au dispositif de gestion (60), une demande de supprimer les informations de destination du premier terminal de communication (10aa) qui termine la connexion, parmi les informations de destination gérées dans le dispositif de gestion (60), et
le second dispositif de commande (50) inclut une seconde unité d'émission de demande de suppression (51) configurée pour émettre, lorsque le second terminal de communication (10bb) termine la connexion au second dispositif de commande (50), au dispositif de gestion (60), une demande de supprimer les informations de destination du second terminal de communication (10bb) qui termine la connexion, parmi les informations de destination gérées dans le dispositif de gestion (60).

4. Système de commande (5) selon l'une quelconque des revendications 1 à 3, dans lequel
chacun des premier et second dispositifs de commande (50x, 50y) inclut une unité de réception d'informations d'état (51) configurée pour recevoir des ensembles d'informations d'état dont chacun indique l'état d'un des terminaux de communication (10aa, 10bb) envoyées par le dispositif de gestion (60) qui gère l'état des terminaux de communication (10aa, 10bb),
le premier dispositif de commande (50x) inclut
une première unité de détermination (53) configurée pour déterminer, sur la base des informations inter-terminal reçues par la première unité de réception d'informations inter-terminal (51) et sur la base des informations d'état reçues par l'unité de réception d'informations d'état (51) du premier dispositif de commande (50x), des informations d'état indiquant le nouvel état du premier terminal de communication (10aa), et
une première unité d'envoi d'informations d'état configurée pour envoyer, au dispositif de gestion (60), les informations d'état indiquant le nouvel état du premier terminal de communication (10aa) déterminé par la première unité de détermination (53).

5. Système de commande (5) selon la revendication 4, dans lequel
chacun des premier et second dispositifs de commande (50x, 50y) inclut
une unité de gestion d'informations d'état (5002) configurée pour gérer des informations d'état indiquant l'état des terminaux de communication (10aa, 10bb), et
une unité de mise à jour (59) configurée pour mettre à jour des informations d'état qui sont gérées dans l'unité de gestion d'informations d'état (5002), sur la base de chacun des ensembles d'informations d'état reçues par l'unité de réception d'informations d'état (51), dans lequel
la première unité de détermination (53) détermine les informations d'état indiquant le nouvel état du premier terminal de communication (10aa), sur la base des informations d'état gérées dans l'unité de gestion d'informations d'état (5002) du premier dispositif de commande (50x).

6. Système de commande (5) selon l'une quelconque des revendications 1 à 5, comprenant :
le premier dispositif de commande (50x) ;
le second dispositif de commande (50y) ; et
le dispositif de gestion (60).

7. Procédé de commande pour un système de commande (5) incluant un premier dispositif de commande (50x) connecté à un premier terminal de communication (10aa) pour commander une session pour envoyer et recevoir des données de contenus et un second dispositif de commande (50y) connecté à un second terminal de communication (10bb) pour commander une session pour envoyer et recevoir des données de contenus, le procédé comprenant :
l'envoi, par le premier dispositif de commande (50x), d'informations de destination indiquant l'adresse du premier terminal de communication (10aa) dans un réseau de communication à un dispositif de gestion (60) qui gère les informations de destination, dans lequel les informations de destination sont envoyées au second terminal de communication (10bb) en réponse à une demande provenant du premier terminal de communication (10aa) ; et
la réception, par le premier dispositif de commande (50x), d'informations de destination indiquant l'adresse du second terminal de communication (10bb) à partir du dispositif de gestion (5002),
**caractérisé par**
la réception, par le premier dispositif de commande (50x), parmi des informations inter-terminal envoyées entre le premier terminal de communication (10aa) et le second terminal de communication (10bb) pour établir la session entre le premier terminal de communication (10aa) et le second terminal de communication (10bb), des informations inter-terminal envoyées par le premier terminal de communication (10aa), les informations inter-terminal destinées à être reçues incluant une demande de commencement pour commencer la communication entre le premier terminal de communication (10aa) et le second terminal de communication (lObb) ;
l'envoi, par le premier dispositif de commande (50x), sur la base des informations de destination du second terminal de communication (10bb), des informations inter-terminal indiquant la demande de commencement au second terminal de communication (lObb) ;
l'envoi, par le second dispositif de commande (50y), des informations de destination du second terminal de communication (10bb) au dispositif de gestion (60) ;
la réception, par le second dispositif de commande (50y), des informations de destination du premier terminal de communication (10aa) à partir du dispositif de gestion (60) ;
la réception, par le second dispositif de commande (50y), parmi des informations inter-terminal envoyées entre le premier terminal de communication (10aa) et le second terminal de communication (10bb), des informations inter-terminal envoyées par le second terminal de communication, les informations inter-terminal destinées à être reçues incluant l'autorisation pour commencer la communication entre le premier terminal de communication (10aa) et le second terminal de communication (10bb) ; et
l'envoi, par le second dispositif de commande (50y), des informations inter-terminal, indiquant l'autorisation pour commencer la communication, au premier terminal de communication (10aa), sur la base des informations de destination du premier terminal de communication (10aa).

8. Procédé de commande selon la revendication 7, comprenant en outre :
l'envoi, par le premier terminal de communication (10aa), des informations inter-terminal, qui indiquent la demande de commencement pour commencer la communication, au premier dispositif de commande (50x) ; et
la réception, par le premier terminal de communication (10aa), des informations inter-terminal qui indiquent l'autorisation pour commencer la communication.

9. Procédé de commande selon la revendication 8, comprenant en outre :
la réception, par le second terminal de communication (10bb), des informations inter-terminal qui sont envoyées par le premier dispositif de commande (50x) et qui indiquent la demande de commencement pour commencer la communication ; et
l'envoi, par le second terminal de communication (10bb), des informations inter-terminal, qui indiquent l'autorisation pour commencer la communication, au second dispositif de commande (50y).

10. Produit programme d'ordinateur, comprenant des instructions qui, lorsqu'elles sont exécutées par les premier et second dispositifs de commande, font en sorte que les dispositifs de commande réalisent les étapes correspondantes selon la revendication 7.
